(19) Europäisches Patentamt
European Patent Office
Office européen des brevets

(11) EP 3 186 294 B1

(12) **FASCICULE DE BREVET EUROPEEN**

(45) Date de publication et mention de la délivrance du brevet:
**12.02.2020 Bulletin 2020/07**

(21) Numéro de dépôt: **15759684.2**

(22) Date de dépôt: **20.08.2015**

(51) Int Cl.:
***C08G 59/02*** *(2006.01)*

(86) Numéro de dépôt international:
**PCT/EP2015/069187**

(87) Numéro de publication internationale:
**WO 2016/030279 (03.03.2016 Gazette 2016/09)**

(54) **MOUSSES EPOXY DERIVEES DE FORMULATIONS REACTIVES BIOSOURCEES**

EPOXIDSCHAUMSTOFFE AUS REAKTIVEN FORMULIERUNGEN BIOLOGISCHEN URSPRUNGS

EPOXY FOAMS DERIVED FROM BIOSOURCED REACTIVE FORMULATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.08.2014 FR 1401903**

(43) Date de publication de la demande:
**05.07.2017 Bulletin 2017/27**

(73) Titulaires:
- **Renfortech**
  **52410 Chamouilley (FR)**
- **Université de Montpellier**
  **34090 Montpellier (FR)**
- **Centre National de la Recherche Scientifique**
  **75016 Paris (FR)**

(72) Inventeurs:
- **MAZZON, Elena**
  **I-10023 Chieri (IT)**
- **GUIGUES, Pascal**
  **F-52100 Saint-Dizier (FR)**
- **HABAS, Jean-Pierre**
  **F-34000 Montpellier (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(56) Documents cités:
**CN-A- 101 289 570 FR-A1- 2 987 049**

- **ENGIN DOGAN ET AL: "Synthesis and in situ foaming of biodegradable malonic acid ESO polymers", JOURNAL OF APPLIED POLYMER SCIENCE, vol. 110, no. 2, 15 octobre 2008 (2008-10-15), pages 1129-1135, XP055186863, ISSN: 0021-8995, DOI: 10.1002/app.28708**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 186 294 B1

## Description

La présente invention a pour objet des mousses polymères thermodurcissables dérivées de formulations époxy à réactivité élevée, leur procédé de préparation et leur utilisation, notamment dans le domaine de l'automobile.

Depuis plusieurs décennies, les véhicules automobiles ont connu une augmentation importante de leur masse d'une génération à l'autre du fait de leur équipement croissant que ce soit sur le plan de la sécurité (airbag, renforts, systèmes d'aide électroniques) ou encore du confort à l'image de la climatisation dont l'emploi s'est démocratisé. Aujourd'hui cette évolution n'est plus permise car elle induit une augmentation de la consommation en carburant du véhicule et par la même de ses émissions de $CO_2$. Elle va en effet à l'encontre de la politique actuelle de contrôle voire de diminution des gaz à effet de serre. L'édiction de normes environnementales de plus en plus sévères propose même l'inverse et nécessite de trouver des solutions scientifiques et techniques permettant de réduire la masse des véhicules automobiles.

A ce titre, plusieurs pistes parallèles ou complémentaires sont actuellement explorées dans le cadre de cette politique d'allègement:

- La première consiste à limiter les efforts résistifs exercés sur le véhicule lors de son déplacement. Elle concerne alors la définition de solutions plus aérodynamiques et la formulation de gommes permettant la fabrication de pneumatiques à résistance au roulement réduite.
- La seconde piste relève de la motorisation par le développement notamment de l'injection directe ou la mise au point de moteurs de plus faible cylindrée mais dopés par un turbo (concept du « down-sizing »).
- La troisième voie de recherche vise à alléger les véhicules. C'est certainement la solution la plus prometteuse car près de 75 % de la consommation de carburant est directement liée à la masse de la voiture. Mais même dans ce dernier cas, plusieurs approches sont encore possibles. En effet, un véhicule automobile fait intervenir de très nombreuses pièces reposant sur des matériaux de nature très diverses.

    a. En ce qui concerne le châssis, voire la carrosserie, il est possible de remplacer les aciers doux par des aciers à très haute limite élastique (THLE), voire ultra haute limite élastique (UHLE). Cette option permet une réduction de l'épaisseur des pièces concernées.
    b. L'utilisation d'alliage d'aluminium forcément plus léger que l'acier est une autre solution possible mais elle peut entraîner une divergence du coût de production. Elle pose également de réelles difficultés de réparation.
    c. D'autres métaux ou alliages « hautes performances » à base de magnésium ou titane sont souvent affectés à des pièces techniques mais leur coût prohibitif les réserve à des pièces stratégiques de petite taille ou à des véhicules premium, voire de luxe.
    d. Les matériaux composites dotés de propriétés spécifiques intéressantes représentent une solution très intéressante. Les premières applications au début des années 70 ont consisté à mélanger des fibres de verre à une matrice thermodurcissable (polyester) notamment pour substituer les pare-chocs métalliques par des pièces à base SMC (Sheet Moulding compound ou plaque composite conformable par moulage). Aujourd'hui, ces mêmes pare-chocs reposent plutôt sur l'association d'une matrice polymère thermoplastique (ex : polypropylène ou mélange compatibilisé « propylène-polyéthylène ») renforcés par des charges minérales (verre, talc, craie...). De nombreuses pièces automobiles, intérieures ou extérieures, reposent sur le même concept « composite » en faisant appel à une matrice thermodurcissable ou thermoplastique renforcée par des charges particulaires ou des fibres de nature minérale, carbonée ou végétale. Parmi l'ensemble des concepts développés, la solution composite la plus prometteuse est celle des structures sandwich qui possèdent une âme centrale allégée. Cette dernière peut être une structure en nid d'abeille (aluminium, dérivé cellulosique...) ou encore une mousse polymère. Notre invention relève justement de cette dernière catégorie.

L'emploi d'une mousse polymère est souvent préféré à une structure « nid d'abeille » car ce type de matière offre une grande liberté de design et présente un coût compétitif. Des pièces de géométries complexes peuvent être ainsi produites *in situ* sans le surcoût, la perte de temps et le gaspillage produit d'un usinage par commande numérique.

Il existe plusieurs types de mousses pétrosourcées actuellement utilisées dans le secteur automobile. Elles se différencient les unes des autres par leurs propriétés mécaniques (rigidité, résistance à la compression ou au choc...) ou encore par leur nature chimique.

1. Les mousses polyuréthanes sont largement répandues et sont déclinées selon une large gamme de produits. Reposant sur la réaction entre un polyol et un polyisocyanate, elles peuvent être de nature thermoplastique ou thermodurcissable suivant la fonctionnalité chimique des espèces réactives. Leurs caractéristiques mécaniques couvrent également un large spectre de propriétés mécaniques grâce à la diversité des squelettes chimiques des polyols potentiellement utilisables et des molécules fonctionnalisées isocyanates. Toutefois, la toxicité de ces dernières molécules isocyanates est avérée. Certains prépolymères à l'image du TDI (diisocyanate de toluène ou 2,4-diisocyanato-1-méthylbenzène) ont une utilisation très règlementée sous dérogation limitée dans le temps quand elle n'est pas purement interdite.

2. Il est possible de produire des mousses époxy souples ou rigides à partir de formulations pétrosourcées mais ces dernières font très souvent appel à un prépolymère DGEBA (pour DiGlycidyl Ether de Bisphénol A). Or, ce dernier est formulé à partir de bisphénol A qui est un composé classé CMR (cancérogène, mutagène, reprotoxique).

Les mousses thermodurcissables « urée-formol » sont elles aussi très critiquables sur le plan sanitaire car elles reposent sur l'utilisation de formaldéhyde très toxique. Le même composé est présent dans les mousses phénoliques dont le bilan sanitaire est aggravé par l'utilisation de composés aromatiques très toxiques (dérivés phénoliques) Leur emploi s'est d'ailleurs largement réduit ces dernières années du fait de la réglementation REACH (Registration, Evaluation, Autorisation and Restriction of Chemicals ou Règlement sur l'enregistrement, l'évaluation, l'autorisation et les restrictions des substances chimiques - RÈGLEMENT (CE) N° 1907/2006 DU PARLEMENT EUROPÉEN ET DU CONSEIL du 18 décembre 2006)

3. Les mousses thermoplastiques (polystyrène, polypropylène...) affichent une capacité au fluage prononcé et sont donc réservées à des fonctions annexes (phoniques en particulier). Elles ne peuvent pas être employées pour satisfaire à la fonction d'âme centrale de matériaux sandwich affectés à une finalité structurale.

4. Les mousses polyméthacrylimides affichent un niveau de performances excellent mais leur coût de revient élevé les destinent plutôt à des applications de haute technologie (aérospatial ou article de sport de compétition). En d'autres termes, leur prix élevé interdit leur utilisation à grande échelle dans le secteur automobile.

Il apparaît donc qu'il existe un réel intérêt pour le développement de mousses polymères de faible densité mais permettant au besoin de couvrir des fonctions structurales (âmes de structures sandwich ou éléments monoblocs), affichant un faible niveau de toxicité tout en étant économiquement accessibles pour le secteur de l'automobile « grand-public » que ce soit sur le plan des matières employées ou encore des processus à mettre en œuvre pour la formation des dites mousses.

Face à l'épuisement de la ressource pétrolière mais également pour trouver une réponse à des contraintes règlementaires de plus en plus exigeantes (REACH, RoHS DIRECTIVE 2011/65/UE DU PARLEMENT EUROPÉEN ET DU CONSEIL du 8 juin 2011 relative à la limitation de l'utilisation de certaines substances dangereuses dans les équipements électriques et électroniques, refonte des Directives 02/95/CE du Parlement européen et du Conseil du 27 janvier 2003 relative à la limitation de l'utilisation de certaines substances dangereuses dans les équipements électriques et électroniques (et ective 2008/98/CE du Parlement européen et du Conseil du 19 novembre 2008 relative aux déchets ...), diverses recherches ont été menées pour tenter de développer des mousses polymères issues de la biomasse.

1. L'amidon est un polymère biodégradable de type polysaccharide naturellement présent dans des nombreux produits végétaux tels que le maïs, la pomme de terre, le riz, le blé. Affichant un faible coût de production, ce polymère a fait l'objet de multiples travaux permettant sa déclinaison sous forme de mousse avec un temps de conversion rapide. Il a fait l'objet de diverses demandes de brevets (WO9400512, KR20010037126 et CN103613840). Un des concepts retenus consiste à hydrater le polymère pour préparer une pâte puis à la disposer dans un moule avant de la chauffer afin de permettre l'évaporation de l'eau qui agit alors comme un agent d'expansion. Malheureusement, les mousses d'amidon sont fragiles et restent sensibles à la reprise d'humidité. Elles conviennent pour remplacer les mousses de polystyrène expansé utilisées dans le secteur de l'emballage mais ne peuvent pas satisfaire à une fonction structurale même si l'ajout de fibres lignocellulosiques (entre 2,5 % et 45 % massique) permet une amélioration significative des caractéristiques mécaniques. Elle est notamment décrite par Lawton J.W. et al. (Industrial Crops and Products, 2004. 19(1): p. 41-48) Soykeabkaew N. et al. (Carbohydrate Polymers, 2004. 58(1): p. 53-63) ou encore Bergeret A. et al. (International Journal of Polymer Science, ID 569871, p. 1-14, 2011). Elle a également fait l'objet de plusieurs demandes de brevets et brevets (US2010199884, US5797984, US5554660).

2. L'utilisation d'acide polylactique lui même produit à partir d'amidon a permis au travers de procédé d'extrusion réactive de produire des mousses thermoplastiques polyesters. Cette invention est notamment décrite dans la demande de brevet US2012007267 et dans la demande internationale WO2013006781. Le matériau présente un bilan écologique très intéressant. Mais ce type de mousse produite par une ligne de plasturgie impose un investissement lourd.

3. De très nombreuses recherches ont également été menées pour tenter de développer des mousses polyuréthanes à partir de la biomasse. Malheureusement, les principaux efforts ont porté sur la définition de nouvelles molécules polyols décrites au travers de nombreuses demandes de brevets (WO2014079721, WO2014048777, US2014221696, US2013023599, WO2014014980). Ces différentes molécules fonctionnalisées polyol sont issues de la modification chimique de ressources renouvelables telles que les huiles végétales (Tu Y.C. et al. Journal of

Applied Polymer Science, 2007. 105(2): p. 453-459 ; Fan H. et al. Journal of Applied Polymer Science, 2013. 127(3): p. 1623-1629 ; Narine S.S. et al., Journal of the American Oil Chemists Society, 2007. 84(1): p. 65-72 ; Guo A. et al., Journal of Applied Polymer Science, 2000. 77(2): p. 467-473 ; Javni I. et al., Journal of Polymers and the Environment, 2004. 12(3): p. 123-129 ; Veronese V.B. et al., Journal of Applied Polymer Science, 2011. 120(1): p. 530-537) ou encore animales (Benes H. et al., European Journal of Lipid Science and Technology, 2012. 114(1): p. 71-83). D'autres sources végétales telles que le cardanol extrait de la noix de cajou ont été utilisées avec la même finalité (Suresh K.I., ACS Sustainable Chemistry & Engineering, 2013. 1(2): p. 232-242). Dans tous ces cas, les formulations polyuréthanes et les mousses qui en dérivent sont partiellement biosourcées mais elles reposent encore sur l'emploi de prépolymères pétrosourcés fonctionnalisés isocyanates. Ainsi, aussi performantes soient-elles, au besoin renforcées par l'ajout de fibres végétales (Aranguren M.I. et al., Journal of Applied Polymer Science, 2007. 105(5): p. 2791-2800 ; Kuranska, M. et al., Composite Science and Technology, 2012. 72(2): p. 299-304 ; CN 101289570), ces mousses polyuréthane n'apportent pas de réel progrès sur le plan sanitaire par rapport à celles issues totalement de la pétrochimie.

4. Les huiles végétales peuvent après acrylation (Bonnaillie L.M. et al. Journal of Applied Polymer Science, 2007. 105(3), p. 1042-1052) ou maléatation (Wang, H.J. et al., Biomacromolecules, 2008. 9(2), p. 615-623) être durcies avec du styrène. En incorporant dans la formulation réactive un agent d'expansion, il est possible de décliner cette résine en mousse thermodurcissable. Mais l'emploi du styrène qui est cancérogène est loin d'être une solution idéale et n'encourage pas l'utilisation à grande échelle de ce type de mousse partiellement biosourcée.

5. Plusieurs études ont été menées pour tenter de développer à partir de synthons biosourcés des mousses rigides thermodurcissables candidates au remplacement des mousses phénoliques traditionnelles. Une des voies privilégiées repose sur l'emploi de tanins autrement dit de poly(flavonoïdes) extraits à partir du bois ou encore de l'écorce de différents arbres comme le mimosa, le pin ou le quebracho. La formulation requiert la présence de formaldéhyde complété éventuellement d'alcool fulfurylique pour entrainer la formation d'un réseau polymère tridimensionnel. L'ajout d'un agent d'expansion tel qu'un solvant volatil est nécessaire afin d'entrainer l'expansion simultanée de la résine lors de la phase de réticulation et ainsi permettre la production de la mousse. Cette approche est notamment largement décrite par Pizzi *et al.* sous diverses variantes que ce soit au travers de demandes de brevets (US2014158927, EP2757126, WO2014053239, WO2014117946) ou d'articles scientifiques associés (Industrial Crops and Products, 2009. 29(2-3): p. 356-363 ; Bioresource Technology, 2009. 100(21): p. 5162-5169). Elle permet la production de mousses rigides avec un temps de réaction très court de l'ordre de quelques minutes. Mais, les réactifs (polyphénols et formaldéhyde) affichent une toxicité élevée, ce qui pose une question certaine sur leur utilisation à long terme.

6. Une autre voie de recherche a consisté à développer des mousses époxy biosourcées dérivées d'huile végétale époxydée. Dogan et al. (Journal of Applied Polymer Science, 2008. 110(2): p. 1129-1135). ont imaginé un concept intéressant impliquant au-delà de la présence de la seule huile époxydée, de l'acide malonique utilisé à la fois comme agent de réticulation et agent d'expansion. Au travers de sa réaction directe avec les groupements époxy de l'huile végétale, cet acide permet la création d'un réseau polymère tridimensionnel selon le schéma représenté ci-après.

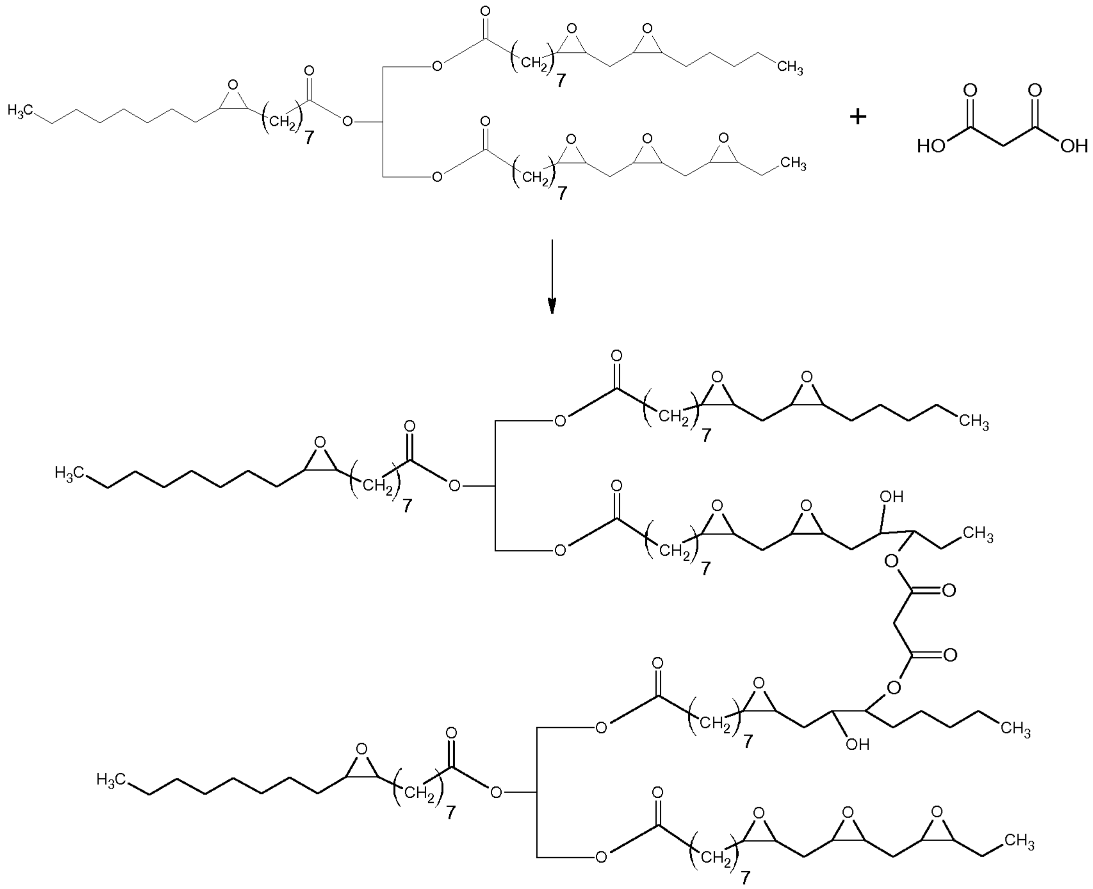

Or l'acide malonique peut également être sujet à la décarboxylation. Au cours de la réaction de réticulation, le mono-ester d'acide malonique (MAME) initialement formé peut être décarboxylé et fournir ainsi du dioxyde de carbone qui va agir comme agent d'expansion selon le schéma illustré ci-après :

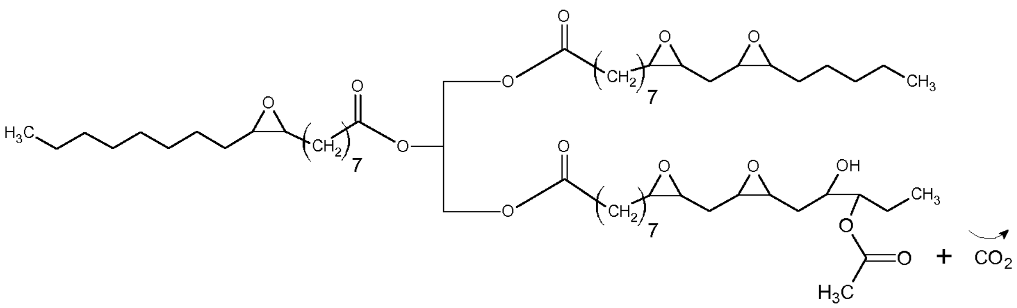

Mais, le procédé est délicat à maitriser en pratique. En effet, même catalysée par utilisation par exemple de 1,4-diazabicyclo[2.2.2]octane (DABCO), la réaction est extrêmement lente puisque des durées de plusieurs heures de traitement thermique sont reportées Ce procédé est alors difficilement transposable sur une ligne de production automobile au sein de laquelle la cadence de production nécessite souvent des temps de mise en œuvre de quelques minutes. De surcroit, les propriétés thermomécaniques ultimes restent faibles et la mousse produite est extrêmement souple.

Or, les inventeurs ont déjà décrit dans la demande internationale WO 2013/124574 des résines époxydes comprenant le produit de réaction d'un ou de plusieurs dérivés lipidiques époxydés biosourcés extraits d'une huile végétale naturelle, avec au moins un agent de réticulation, en présence d'au moins un co-réactif choisi parmi les dérivés glycidyl éthers de polyols biosourcés. Ces résines présentent une très haute réactivité. Il est possible de formuler des résines dont les caractéristiques de réactivité peuvent être modulées par la proportion et la nature des espèces chimiques initiales. La même polyvalence est rencontrée avec les matériaux obtenus par la réticulation de ces mêmes formulations

réactionnelles. Par exemple, la gamme de température de transition vitreuse couvre un large domaine, compris entre -35 °C et + 180 °C. Il est ainsi possible de produire des matrices affichant à température ambiante une grande flexibilité ou au contraire une rigidité mécanique élevée.

A partir de ces résines, les Inventeurs ont montré qu'il était possible de réaliser des mousses époxy d'origine biosourcée reposant sur des formulations initiales dotées d'une réactivité améliorée.

Aussi la présente invention a pour objet des mousses biosourcées rigides ou souples préparées en faisant réagir :

a. le produit de réaction d'un ou de plusieurs dérivés lipidiques époxydés biosourcés, avec au moins un agent de réticulation, en présence d'au moins un co-réactif choisi parmi les dérivés glycidyl éthers de polyols biosourcés, avec
b. un agent de gonflement et
c. un composé absorbeur d'exothermicité.

Conformément à l'invention, l'utilisation combinée d'huile végétale époxydée, de co-réactif et d'un durcisseur de type amine ou anhydride permet la réalisation de matériaux alvéolaires structuraux. En revanche, les mousses décrites par Dogan *et al.* préparées à partir d'une combinaison de mono-ester d'acide malonique avec de l'huile de soja époxydée ne présentent pas de réseau macromoléculaire rigide et sont de type caoutchoutique avec un module de compression inférieur au MPa et une Tg nettement inférieure à la température ambiante puisqu'elles sont souples. Au contraire, comme le montrent les exemples, les mousses selon l'invention, sont caractérisées par des Tg supérieures à la température ambiante, ce qui est en accord avec l'existence d'un réseau macromoléculaire rigide. En outre dans les mousses selon l'invention chaque composant a son activité propre, alors que dans les mousses décrites par Dogan *et al.* le mono-ester de l'acide malonique est à la fois utilisé comme durcisseur et comme agent de moussage, cette dernière fonction étant liée à la présence du dioxyde de carbone produit par la décarboxylation dudit monoester. De ce fait, la gamme de densités possibles est fortement réduite.

Au sens de la présente invention, le terme « biosourcé » désigne un produit issu de la biomasse. La biomasse décrit la masse totale d'organismes vivants d'origine végétale ou animale dans un milieu défini, appelé biotope, et les ressources qui en découlent au travers d'une utilisation directe, indirecte ou potentielle pour l'humanité.

Au sens de la présente invention on entend par mousse rigide une mousse affichant à température ambiante un module d'Young supérieur à 10 MPa et par mousse souple une mousse dont le module d'Young en compression est inférieure à 10 MPa.

Au sens de la présente invention, on entend par agent de gonflement ou agent gonflant ou agent de moussage ou agent moussant ou agent d'expansion (ces termes étant équivalents dans le texte qui suit), un composé capable de produire de grandes quantités de gaz lorsqu'il est chauffé ou exposé à un composé chimique avec lequel il peut réagir. Afin d'obtenir une mousse, il est impératif d'établir un compromis entre la cinétique de production des gaz, initiée par l'activation thermique ou chimique de l'agent moussant, et la cinétique de gélification de la formulation polymère réactive auquel l'agent moussant est ajouté.

En effet, si la gélification de la formulation polymère réactive prédomine (formulations caractérisées par un temps de gel très courts) la formation et la croissance des alvéoles sont gênées par l'augmentation brutale de la viscosité de la résine. En revanche, si la cinétique de décomposition de l'agent moussant prédomine, les bulles formées ne restent pas piégées dans la résine du fait de sa viscosité trop faible (le temps de gel est alors trop long). C'est seulement lorsque les deux phénomènes sont en équilibre (c'est à dire gérés par des cinétiques comparables), qu'il est possible d'obtenir une mousse homogène. Au delà de l'influence de la matrice polymère support, sa densité pourra être ajustée par la proportion et la nature de l'agent moussant. Il est notamment possible de produire des mousses très légères.

L'agent d'expansion qui est nécessaire pour obtenir la production d'alvéoles au sein de la matrice polymère est dissous ou mélangé à la formulation polymère réactionnelle initiale. Pendant la phase de mise en forme, il subit une transformation chimique (réaction) ou physique (changement d'état) qui génère un gaz et conduit à la formation d'alvéoles à l'intérieur du polymère.

Les agents d'expansion qui relèvent de notre invention peuvent être classifiés en deux grandes familles, d'une part les agents d'expansion physiques et d'autre part les agents d'expansion chimiques.

Au sens de la présente invention, nous appellerons « agents d'expansion physiques », tout composé permettant la production d'un gaz au travers d'un mécanisme physique tel que la vaporisation d'un liquide ou encore la libération d'un gaz initialement dissous sous des conditions de haute température et/ou de pression élevée dans une matrice support (cette dernière peut être un liquide inerte ou inversement une formulation polymère réactionnelle) et qui sera libéré par changement des conditions de température et/ou pression. La composition chimique de cette classe d'agent d'expansion reste inchangée lors du phénomène de production de gaz.

Les inventeurs ont montré que la température de vaporisation n'était pas en soi un critère de sélection suffisant. En effet, la production du gaz au sein de la matrice polymère obéit à un bilan thermodynamique. Il est alors nécessaire pour opérer à la sélection optimale de l'agent de moussage physique de tenir compte en particulier de la chaleur latente

de vaporisation de l'agent d'expansion et de ses chaleurs spécifiques massiques à l'état liquide et gazeux, en sus des caractéristiques calorimétriques de la formulation polymère auquel il doit être mélangé. Au sens de notre présente invention, les agents d'expansion physiques qui peuvent être retenus sont les liquides organiques comme les alcanes (propane, n-butane, pentane...), les cétones (acétone, pentanone, heptanone...) les alcools (éthanol, propanol, butanol, pentanol...), les esters (acétate d'éthyle, l'acétate de 2-éthyl-hexyl...), les glycols (éthylène glycol, propylène glycol) et les éthers (éther diéthylique...). La liste possible d'agents de moussage physique englobe également les gaz comprimés tels que l'azote ($N_2$) et le dioxyde de carbone ($CO_2$). Il est possible de désigner également sous le terme d'agents d'expansion physiques, des microsphères expansibles creuses formées par une coque thermoplastique, typiquement un copolymère, au sein de laquelle a été préalablement emprisonné un composé liquide ou gazeux et dont l'expansion est rendue possible au dessus d'une température critique conditionnée par la température de transition vitreuse (voire de fusion) de la dite coque polymère. Ce type de microsphères expansibles est notamment représenté par la gamme des Expancel de la société AkzoNobel et est décrit dans la demande internationale WO0107154. Cette dernière est déclinée autour de plusieurs combinaisons « coque thermoplastique/composé organique » afin de répondre à des températures d'expansion très précises.

Dans la présente invention, seront retenus avantageusement dans la classe des alcanes, le pentane et l'octane. Dans la classe de cétones, seront retenus avantageusement l'acétone et le pentanone. Dans la classe des alcools seront retenus avantageusement l'éthanol et le butanol. Dans la classe des Expancel, seront retenus avantageusement les grades EXPANCEL 461 DU 40, 920 DET 40 d25 et 920 DE 80 d30.

Au sens de la présente invention, nous appellerons « agents d'expansion chimiques », tout composé solide ou liquide dispersé dans la formulation polymère réactionnelle et qui sous l'effet de la température ou d'une réaction chimique, libère un ou plusieurs gaz permettant la formation des alvéoles au sein de la matrice polymère. La composition chimique de l'agent d'expansion avant et après moussage est donc différente.

Les agents d'expansion chimiques peuvent êtres divisés en deux sous-groupes selon le caractère endothermique ou exothermique de la réaction permettant la production gazeuse. On distinguera ainsi les agents d'expansions chimiques exothermiques et les agents d'expansions chimiques endothermiques.

L'agent d'expansion chimique exothermique peut ainsi être choisi dans le groupe comprenant :

- l'azodicarbonamide (ou carbamoyliminourée),
- certains hydrazides tels que le p-toluène sulfonyl hydrazide, le 4,4-oxy-bis(benzène-sulfonyl hydrazide), le benzène sulfonyl hydrazide,
- certains semicarbazide tels que le p-toluène sulfonyl semicarbazide.

Dans le cadre de notre invention, il est préférable d'utiliser des agents d'expansion chimiques endothermiques afin d'éviter tout emballement thermique lorsque la réaction de réticulation de la résine polymère est elle-même très exothermique c'est-à-dire supérieure à environ 350 J/g. On distinguera ainsi dans le groupe des agents d'expansion chimiques endothermiques :

- le 5-phényltétrazole,
- le phosphate de triphényle,
- le borate de sodium ou tétraborate de sodium ou borax,
- l'acide borique,
- l'acide benzoïque,
- les carbonates tels que le bicarbonate d'ammonium (ou hydrogénocarbonate d'ammonium), le carbonate d'ammonium, le carbonate de zinc, le bicarbonate de sodium ou hydrogénocarbonate de sodium et le bicarbonate de potassium.

Au sens de la présente invention, il est possible de préparer des mousses biosourcées respectueuses de l'environnement en choisissant préférentiellement le bicarbonate de sodium ($NaHCO_3$, abrégé « BS ») capable de se décomposer, par simple effet de la température, en produisant de l'eau, du $CO_2$ et un résidu non toxique selon le schéma suivant :

$$2\ NaHCO_3 \rightarrow CO_2 + Na_2CO_3 + H_2O$$

Il est possible également d'opter pour les autres carbonates tels que susmentionnés à l'image du bicarbonate de potassium (BP) dont le schéma réactionnel est :

$$2\ KHCO_3 \rightarrow CO_2 + K_2CO_3 + H_2O$$

Chaque agent d'expansion chimique endothermique ou exothermique est bien sûr caractérisé par une température au delà de laquelle la réaction de décomposition survient. Il est possible de déterminer cette température minimale par la conduite d'expériences thermogravimétriques (ou TGA) qui consistent à enregistrer l'évolution de la masse de l'agent d'expansion chimique lors d'une montée en température. En effet, la réaction va générer des produits gazeux dont le départ va entraîner une perte de masse de l'échantillon. La figure 1 illustre l'expérience menée avec le bicarbonate de sodium. La température minimale de réaction peut être prise au point d'inflexion associée à la courbe de la masse résiduelle (en trait continu). Il est souvent plus pratique de tracer la dérivée du pourcentage de la masse résiduelle en fonction de la température (trait discontinu) et de relever la température minimale au pied du pic qui délimite le domaine thermique au sein duquel la réaction chimique se produit en mode continu. Dans le cas présent, la réaction se produit dès 80 °C et se poursuit jusqu'à 190 °C.

La figure 2 illustre les données thermogravimétriques enregistrées avec le bicarbonate de potassium. Dans ce dernier cas, la réaction qui génère la production des gaz ($CO_2$ et $H_2O$) survient en mode continu dans la gamme de température 100 °C et est achevée à 195 °C. De manière accessoire, ces mêmes analyses permettent au travers de la mesure de la masse résiduelle ultime de déterminer le pourcentage massique associé au résidu (à savoir respectivement $Na_2CO_3$ et $K_2CO_3$). Ce résidu a une réelle utilité car il est bien sûr présent dans la mousse qui a été induite par la réaction chimique de l'agent d'expansion chimique endothermique au sein de la résine polymère réactive. Il joue le rôle d'une charge de renfort et contribue ainsi aux propriétés mécaniques de la mousse polymère.

Ainsi, on comprend qu'il est possible sur la base de mesures scientifiques de déterminer l'agent d'expansion le plus adéquat pour l'expansion d'une résine époxy biosourcée au sens de l'invention. Les inventeurs ont pu identifier qu'il était pertinent de confronter la réponse calorimétrique (ou DSC) de la formulation polymère réactionnelle avec celle de l'agent d'expansion. Lors d'une montée en température, la formulation polymère va réticuler et le domaine thermique associé sera défini en DSC par la présence d'un pic exothermique. La réaction de l'agent d'expansion chimique tel que le BS ou le BP va produire quant à elle un pic endothermique. Le meilleur compromis entre « réaction de réticulation » et « réaction de production gazeuse » nécessaire à la production d'une mousse de qualité est décrit en choisissant pour une formulation polymère donnée, un agent de moussage dont l'action survient essentiellement dans la partie finale du domaine thermique caractéristique de la réaction de réticulation. En effet, il ne faut pas que la réaction de production gazeuse interdise par son caractère endothermique le démarrage de la réaction de réticulation qui est activée thermiquement.

Les figures 3 et 4 décrivent respectivement les réponses DSC enregistrées avec deux formulations polymères décrite dans la demande internationale WO 2013/124574 (une à base de durcisseur amine IPDA et l'autre à base de durcisseur anhydride MTHPA) et celles caractéristiques de deux agents d'expansions chimiques endothermiques (le bicarbonate de sodium ou BS et le bicarbonate de potassium ou BP).

Les inventeurs ont ainsi pu démontrer que des mousses homogènes étaient produites de manière optimale en utilisant le BS pour le moussage de la formulation 10ELO-90GE-IPDA et le BP pour l'expansion de la formulation 10ELO-90GE-MTHPA.

Certains composés chimiques permettent la production de gaz sur un large domaine de température à l'image de l'hydrotalcite. Mais à une température donnée, la production gazeuse reste limitée et le profil TGA est beaucoup plus complexe ainsi qu'en atteste, à titre d'exemple, la figure 5 caractéristique de la réponse de l'hydrotalcite.

Ce type de composé chimique n'est pas assez performant pour assurer seul le volume de gaz nécessaire à la formation de la mousse. En revanche, la réaction présente un caractère endothermique important ainsi qu'en atteste l'analyse DSC du produit présenté en figure 6. Le premier pic présente à lui seul une enthalpie de 565 J/g. Les inventeurs ont alors identifié que ce composé pouvait alors être ajouté à la formulation polymère réactionnelle initiale en complément de l'agent d'expansion comme limiteur (ou absorbeur) d'exothermie permettant du même coup de qualifier des formulations polymères qui se seraient dégradées seules du fait de la valeur d'exothermie potentiellement très élevée qui accompagne leur réaction de réticulation.

Ainsi, au sens de la présente invention on entend par composé absorbeur d'exothermicité ou absorbeur d'exothermie ou limiteur d'exothermie (ces termes étant équivalents dans le présent texte) un agent qui, au moment de sa dégradation thermique, subit une réaction endothermique capable de consommer l'excès d'exothermicité dégagée par la réticulation de la résine donc d'en empêcher la dégradation. Celui-ci est choisi de sorte que l'absorption de chaleur ne soit pas trop importante, afin de ne pas empêcher la formation des alvéoles et/ou la réticulation de la résine de base mais suffisante pour que la mousse ne soit pas détruite par un excès d'exothermicité dégagée.

De plus, l'ajout de cet agent ne doit ni empêcher les phénomènes de moussage, ni affecter négativement les propriétés finales des matériaux alvéolaires.

On peut citer à titre d'exemple l'hydrotalcite, le carbonate de magnésium basique et l'hydroxyde d'aluminium.

Les quantités d'agent d'exothermicité et d'agent gonflant par rapport à la masse de résine époxy varient en fonction du type de résine de départ et de la nature des agents mis en œuvre. L'homme du métier saura les définir facilement à la lumière de ses connaissances générales. Ainsi, pour un agent gonflant donné, et une résine donnée, il saura choisir un agent absorbeur d'exothermicité affichant une réaction dotée d'une enthalpie endothermique suffisante

pour empêcher la dégradation de la résine polymère sans gêner ni sa réticulation ni l'action de l'agent de moussage. Le dosage de chaque composant doit donc être opéré avec soin grâce notamment à la conduite de mesures calorimétriques permettant de quantifier les différentes enthalpies mises en présence entre la formulation polymère, l'agent d'expansion et l'absorbeur d'exothermicité.

Dans un mode de réalisation avantageux de l'invention, le rapport du nombre de groupements réactifs de l'agent de réticulation sur le nombre total de groupements époxy présents dans le mélange dérivé lipidique époxydée/co-réactif, est égal au rapport du nombre de groupements réactifs de l'agent de réticulation sur le nombre total de groupements époxy du ou des dérivés lipidiques s'ils étaient utilisés comme seule source de groupements époxy.

On entend par dérivés lipidiques époxydés biosourcés soit des acides gras insaturés présents à l'état naturel sous forme époxydée dans des huiles naturelles végétales ou animales, soit des composés obtenus par époxydation d'acides gras insaturés, d'esters d'acides gras insaturés, les dits acides gras insaturés comprenant une ou plusieurs doubles liaisons carbone-carbone et étant issus d'huiles naturelles, végétales ou animales. Ces acides gras insaturés comprennent au moins 12 atomes de carbone, encore plus avantageusement entre 12 et 20 atomes de carbone, notamment 12, 14, 16, 18 ou 20 atomes de carbone.

Les dérivés lipidiques époxydés biosourcés peuvent être de toute origine. Ils peuvent être issus d'huile végétale naturelle dans laquelle les dérivés lipidiques époxydés sont présents naturellement comme par exemple l'huile de vernonia. Ils peuvent également être obtenus par époxydation de lipides extraits d'huiles naturelles végétales ou animales. A titre d'exemple d'huile végétale, on peut citer l'huile de lin, de chanvre, de tournesol, de colza, de soja, d'olive, de pépins de raisin, de bois de Tung, de coton, de maïs, de noisette, de noix, de noix de coco, de palme, de ricin, de noix de cajou, d'arachide, de calebasse, de margose (ou margoze) et de pipangaille et le mélange de celles-ci. A titre d'exemple d'huile animale, on peut citer le saindoux, le suif de bœuf et les huiles de poisson comme l'huile de saumon, de sardine, d'anchois, de maquereau, de thon, ou encore de hareng.

Avantageusement on choisira l'huile de lin ou de chanvre. En effet l'huile extraite des graines de ces plantes est très riche en acides gras insaturés (> 90%) avec notamment une forte proportion d'acides gras linoléïque et linolénique (voir tableau 1 pour l'huile de lin).

Tableau 1 : Composition type d'une huile de lin

| Acides gras saturés | Acides gras insaturés | | |
|---|---|---|---|
| 10% | 90% | | |
| | Acide oléïque | Acide linoléïque | Acide linolénique |
| | 12-34 % | 17-24 % | 35-60 % |

La valorisation de l'huile de lin ne rentre aucunement en conflit avec une production orientée initialement vers l'alimentaire qui privilégie les huiles de tournesol, soja, colza, arachide ou olive. L'huile de lin est à ce titre déjà proposée commercialement sous forme époxydée. Son époxydation permet ainsi de dresser une molécule modèle porteuse de 1 à 6 groupements époxydes qui seront autant de fonctions qui pourront réagir avec des groupements réactifs de l'agent de réticulation pour former des réseaux macromoléculaires.

Les dérivés lipidiques époxydés sont disponibles dans le commerce ou sont préparés par époxydation selon tout procédé connu de l'homme du métier, par exemple par réaction avec du peroxyde d'hydrogène.

Dans un mode de réalisation avantageux de l'invention, le dérivé glycidyl éther de polyol, utilisé comme co-réactif est obtenu par époxydation du glycérol ou d'un polyglycérol issu d'huiles végétales et répond à la formule (I)

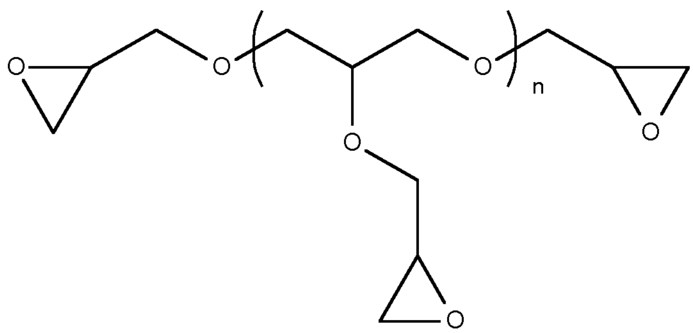

où n est un nombre entier compris entre 1 et 20, notamment le dérivé glycidyl éther du glycérol (GE) de formule (Ia)

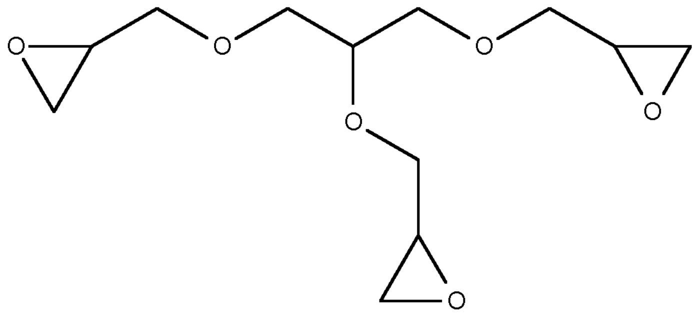

(Ia)

et le dérivé glycidyl éther du diglycérol de formule (Ib)

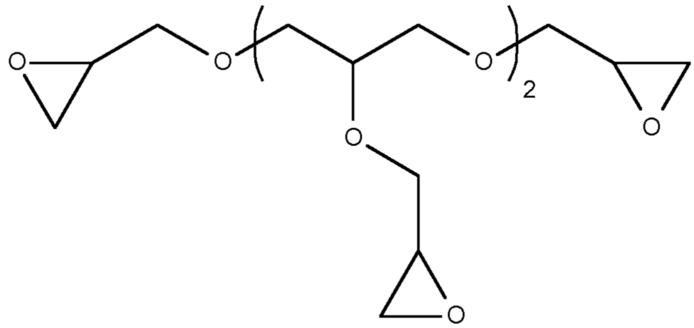

(Ib)

Dans un autre mode de réalisation avantageux de l'invention le dérivé glycidyl éther de polyol utilisé comme co-réactif ou seul est obtenu par époxydation d'un sucre, et est notamment le dérivé glycidyl éther du sorbitol de formule (II)

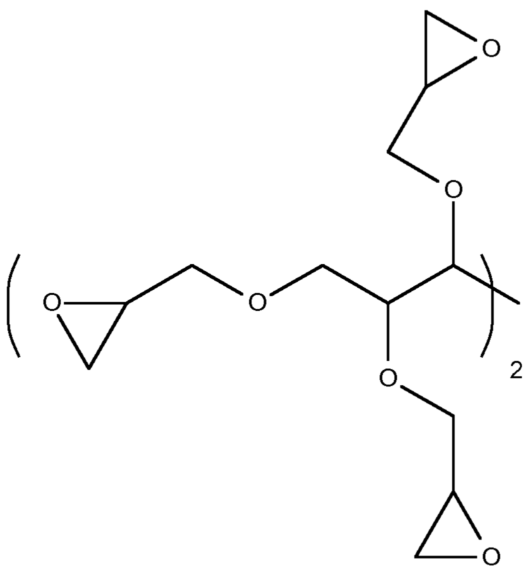

(II)

Au sens de la présente invention, on entend par «agent de réticulation» ou «durcisseur», un composé qui réagit avec les époxydes pour permettre la création d'un réseau polymère tridimensionnel. On parle alors de réticulation. Conformément à l'invention, les durcisseurs sont soit d'origine biosourcée, soit ceux habituellement utilisés pour la préparation des résines pétrosourcées et sont choisis dans le groupe comprenant des composés porteurs de fonctions acides comme les anhydrides d'acides, des composés porteurs d'amines primaires ou secondaires comme les diamines,

les polyamines et leurs mélanges, des diacides et des polyacides, des alcools y compris les phénols et des polymercaptans et les mélanges d'au moins deux de ces agents.

On peut citer à titre d'exemple d'anhydrides d'acides : l'anhydride succinique, l'anhydride maléique, l'anhydride dodécénylsuccinique, l'anhydride phtalique, l'anhydride hexahydrophtalique, l'anhydride méthylhexahydrophtalique, l'anhydride méthyl-tétrahydrophtalique et l'anhydride méthyl-*endo*-méthylènetétrahydrophtalique.

On peut citer à titre d'exemple d'amines :

- les diamines aliphatiques de formule générale $H_2N$-Ra-$NH_2$ où Ra est une chaine aliphatique, notamment l'éthylènediamine, l'hexaméthylènediamine, la bis(3-aminopropyl)amine, la 1,10-décanediamine. Quelques exemples biosourcés: la 1,4-butanediamine, la 1,5-pentanediamine ou encore la 1,12-dodécanediamine, la 1,18-octadécanediamine,
- les diamines cycloaliphatiques de forme générique $H_2N$-Rb-$NH_2$ où Rb est une unité cyclique aliphatique, notamment l'isophorone diamine également désignée sous l'abréviation IPDA, les diamines aromatiques de forme générique $H_2N$-Rc-$NH_2$ où Rc est un cycle aromatique, notamment la phénylènediamine sous ses formes ortho, méta, para, la xylylènediamine sous ses formes ortho, méta, para, le 2,5-diaminotoluène, le 4,4'-diaminobiphényle, le 4,4'-diaminodiphénylméthane. Un exemple biosourcé : la lysine,
- les polyamines porteuses d'au moins 5 groupements N-H, notamment la diéthylènetriamine, la triéthylènetétramine, la tétraéthylènepentamine, la poly(oxypropylène) triamine et les polyétheramines ou polyoxyalkyleneamines. Quelques exemples biosourcés : les polypeptides naturels.

On peut citer à titre d'exemple de diacides les molécules suivantes : acide heptanedioïque HOOC-$(CH_2)_5$-COOH ; acide phtalique ; acide isophtalique ; acide fumarique, acide maléique, acide téréphtalique, acide succinique, acide itaconique, acide hexahydrophtalique, acide méthyl hexahydrophtalique, acide tétrahydrophtalique, acide méthyl tétrahydrophtalique, et acide pyroméllitique.

On peut citer à titre d'exemple de polymercaptans ou polythiols, les molécules suivantes : 1,2,5-trimercapto-4-thiapentane, 3,3-dimercaptomethyl-1,5-dimercapto-2,4-dithiapentane, 3-mercaptométhyl-1,5-dimercapto-2,4-dithiapentane, 3-mercaptométhylthio-1,7-dimercapto-2,6-dithiaheptane, 1,2,7-trimercapto-4,6-dithiaheptane, 3,6-dimercaptométhyl-1,9-dimercapto-2,5,8-trithianonane, 1,2,9-trimercapto-4,6,8-trithianonane, 3,7-dimercaptomethyl-1,9-dimercapto-2,5,8-trithianonane, 4,6-dimercaptomethyl-1,9-dimercapto-2,5,8-trithianonane, 3-mercaptomethyl-1,6-dimercapto-2,5-dithiahexane, 3-mercaptométhylthio-1,5-dimercapto-2-thiapentane, 1,1,2,2-tetrakis(mercaptométhylthio)éthane, 1,1,3,3-tetrakis(mercaptomethylthio)propane, 1,4,8,11-tetramercapto-2,6,10-trithiaundecane, 1,4,9,12-tetramercapto-2,6,7,11-tetrathiadodecane, 2,3-dithia-1,4-butanedithiol, 2,3,5,6-tetrathia-1,7-heptanedithiol, 2,3,5,6,8,9-hexathia-1,10-decanedithiol.

Avantageusement le au moins un agent de réticulation est choisi :

a. dans le groupe comprenant des composés porteurs de fonctions amines, lesdits composés, lorsqu'ils sont porteurs de fonctions amines primaires étant choisis dans le groupe comprenant les diamines, les polyamines et leurs mélanges ou

b. dans le groupe des anhydrides acides.

Dans un autre mode de réalisation particulier de l'invention, lorsque le au moins un agent de réticulation est un composé porteur de groupements N-H, appartenant à des fonctions amines primaires ou secondaires, le rapport QNH :

$$Q_{NH} = \frac{\text{nombre de groupements N-H}}{\text{nombre de groupements époxy portés par (les dérivés lipidiques + le au moins un co-réactif)}}$$

est avantageusement tel qu'à chaque groupement époxy correspond 1 groupement N-H. Cela équivaut à dire que le rapport du nombre de groupements N-H sur le nombre de groupements époxy est égal à l'unité.

Dans un autre mode de réalisation particulier de l'invention lorsque le au moins un agent de réticulation est un composé porteur de groupements anhydride d'acide, le rapport $Q_{anhydride}$

$$Q_{anhydride} = \frac{\text{nombre de groupements anhydride d'acide}}{\text{nombre de groupements époxy portés par (les dérivés lipidiques + le au moins un co-réactif)}}$$

est avantageusement tel qu'à chaque groupement époxy correspond 1 groupement anhydride d'acide. Cela équivaut à dire que le rapport du nombre de groupements anhydride acide sur le nombre de groupements époxy est égal à l'unité.

Dans le cas où le rapport $Q_{NH}$ ou $Q_{anhydride}$ est différent de 1, la réaction entre le composé époxy et l'agent de réticulation (polyamine ou anhydride d'acide) reste possible. L'homme du métier saura définir la stœchiométrie optimale de manière à obtenir un matériau capable de satisfaire les exigences techniques de l'application visée.

Les mousses selon l'invention peuvent en outre contenir des additifs usuels dans le domaine comme par exemple des diluants, des solvants, des pigments, des charges, des plastifiants, des anti-oxydants, des stabilisants. Ces additifs peuvent être ou non biosourcés.

L'invention a également pour objet un procédé de formulation de mousses époxydes biosourcées comprenant :

a) une étape de mélange d'un ou de plusieurs dérivés lipidiques époxydés biosourcés, en présence d'au moins un co-réactif choisi parmi les dérivés glycidyl éthers de polyols biosourcés,
b) une étape d'introduction de l'agent gonflant puis son mélange avec le produit issu de l'étape a), et éventuellement
c) une étape d'addition d'un agent d'exothermicité,
d) une étape d'addition d'au moins un agent de réticulation, puis
e) le mélange de ces différents ingrédients.

Dans un mode de réalisation particulier de l'invention, le procédé de préparation des mousses époxydes biosourcées comprend les étapes suivantes :

a) mélanger un ou plusieurs dérivés lipidiques époxydés biosourcés,
b) ajouter le co-réactif puis opérer à un brassage pour obtenir un mélange époxy homogène,
c) ajouter l'agent gonflant et l'agent d'exothermicité et
d) ajouter l'agent de réticulation au dit mélange puis opérer à un nouveau brassage,
e) laisser alors réagir.

Les brassages ou mélanges peuvent être réalisés par toute technique connue de l'homme du métier, notamment par brassage mécanique. La durée du brassage à l'étape b) est de l'ordre de 1 à 5 minutes et est facilement déterminée par l'homme du métier. La durée du brassage à l'étape c) est de l'ordre d'une minute.

L'étape e) est réalisée dans les conditions de temps et température déterminées par la conduite préalable d'expériences classiquement affectées à l'optimisation de la réticulation d'un polymère thermodurcissable (mesures calorimétriques différentielles ou DSC, rhéométrie en régime permanent ou oscillatoire, techniques diélectriques...).

L'agent de réticulation et le co-réactif peuvent être sous forme solide ou liquide. Lorsque l'agent de réticulation et/ou le co-réactif utilisés sont sous forme solide, il est préférable de préchauffer séparément chaque constituant de la formulation à une température permettant la fusion de tous les composés. Cette précaution garantit l'homogénéité du futur mélange. Une fois cette température atteinte, le co-réactif peut être ajouté à l'huile, suivi de l'agent de réticulation en respectant les étapes b) à d) décrites précédemment.

Les mousses époxydes biosourcées selon l'invention peuvent être utilisées comme substitut des mousses issues de la pétrochimie, notamment pour la constitution d'âmes alvéolaires de matériaux composites sandwich à destination des transports (automobile, ferroviaire, aéronautique, nautisme...) du bâtiment, du sport ou encore du mobilier notamment urbain. On peut ainsi citer diverses pièces de structure rencontrées dans la construction (profilés, poutres, outils), les transports notamment automobile (pièces moulées, panneaux de carrosserie doublés, planchers), l'aérospatiale (éléments internes ou structuraux d'avions), le nautisme (pièces internes de coques, appendices tels que dérives, safrans...), les loisirs et les sports (skis, patins, canoës, cadres de raquette, planches à neige..). Elles peuvent également être utilisées seules en tant que blocs massifs ou fins notamment pour les applications techniques intéressées par des matériaux légers mais dotés de caractéristiques d'isolation phonique et thermique.

L'invention est illustrée par les figures 7 et 8 et par les exemples 1 et 2 qui suivent.

La figure 7 illustre l'influence de la nature de l'agent absorbeur d'exothermicité sur les propriétés thermomécaniques finales de différentes mousses formées par le mélange puis l'exposition thermique à 180 °C durant 3 minutes, d'une résine polymère 10ELO-90GE-IPDA avec 40 parts de BS et comportant un agent absorbeur d'exothermie spécifique (carbonate de magnésium basique, hydroxyde d'aluminium et hydrotalcite).

L'expérience menée au moyen d'un analyseur mécanique dynamique (DMA) consiste à enregistrer l'évolution en fonction de la température du module d'Young E du matériau alvéolaire grâce à l'emploi d'une géométrie dite « plateaux de compression ». L'échantillon est soumis à une contrainte sinusoïdale et la mesure de sa déformation induite accompagnée du déphasage associé permet de définir les deux composantes du module d'Young E* = E' + j E". La composante E' est appelée «module de conservation» ; elle traduit l'énergie stockée puis restituée par le matériau et illustre sa rigidité mécanique. La composante E" désigne le «module de perte» caractéristique de l'énergie mécanique dissipée du fait des mouvements moléculaires se produisant au sein de la matière.

Avec l'augmentation de la température, selon une rampe définie au préalable (dans ce cas 2°C/min), on observe à une valeur très précise de la température, appelée Ta, une chute importante de la valeur de la rigidité mécanique (composante E') de la mousse. Cette dernière est associée à la température de transition vitreuse de la base polymère réticulée et définit la température à laquelle la mousse ne peut plus satisfaire de fonction structurale. Les tangentes à la courbe, avant et après la diminution de la valeur du module élastique, permettent d'identifier avec soin la température de transition vitreuse du matériau.

Le profil thermomécanique de la mousse comportant comme agent absorbeur d'exothermie du carbonate de magnésium basique est représentée par des symboles triangulaires (∆), celle employant de l'hydroxyde d'aluminium par des symboles (●) et celle à base d'hydrotalcite par des symboles (○)
La figure 8 décrit la réponse thermomécanique de la mousse formée par le mélange puis l'exposition thermique à 180 °C durant 3 minutes, d'une résine polymère 10ELO-90GE-MHTPA avec 40 parts de BP et ne nécessitant pas d'agent absorbeur d'exothermie. La valeur de $T\alpha$ nettement supérieure au cas précédent alors que les prépolymères époxy sont les mêmes soulignent l'importance de l'agent de réticulation. L'exemple montre qu'il est possible de produire une mousse avec d'autres agents de moussage que le seul BS et que dans le cas présent, il n'est pas nécessaire d'agent absorbeur d'exothermie car la réaction de réticulation est plus faiblement exothermique.

**Figures** :

Figure 1 : Analyse thermogravimétriques (TGA) du bicarbonate de sodium sous air et avec une rampe thermique de 5°C/min.
Figure 2 : Analyse thermogravimétriques (TGA) du bicarbonate de potassium sous air et avec une rampe thermique de 5°C/min.
Figure 3 : Analyses des réponses calorimétriques (DSC) dynamiques des formulations 10ELO-90GE-IPDA et MTHPA.
Figure 4 : Analyses des réponses calorimétriques (DSC) dynamiques des bicarbonates de sodium et bicarbonate de potassium
Figure 5 : Analyse thermogravimétriques (TGA) de l'hydrotalcite sous air et avec une rampe thermique de 5°C/min.
Figure 6 : Analyses des réponses calorimétriques (DSC) dynamiques de l'hydrotalcite.
Figure 7 : Influence de la nature de l'agent absorbeur d'exothermicité sur les propriétés thermomécaniques finales de différentes mousses formées par le mélange puis l'exposition thermique à 180 °C durant 3 minutes, d'une résine polymère 10ELO-90GE-IPDA avec 40 parts de BS et comportant un agent absorbeur d'exothermie spécifique (carbonate de magnésium basique, hydroxyde d'aluminium et hydrotalcite)
Figure 8 : Réponse thermomécanique de la mousse formée par le mélange puis l'exposition thermique à 180 °C durant 3 minutes, d'une résine polymère 10ELO-90GE-MHTPA avec 40 parts de BP et ne nécessitant pas d'agent absorbeur d'exothermie.

**Exemple 1, selon l'invention** : **Mousses préparées à partir d'un mélange d'huile de lin époxydée (ELO), de glycérol époxydé (GE) et d'isophorone diamine (IDPA) dans les proportions suivantes : 10ELO_90GE_IPDA (100 parts), de 40 parts de bicarbonate de sodium et d'un agent absorbeur d'exothermicité**

1.1. Mode opératoire

Préparation du mélange réactif

a. La stoechiométrie du mélange ELO-GE-IPDA est calculée de façon à conférer au milieu un rapport du nombre de groupements époxy par le nombre de groupements amine égal à celui choisi dans le cas du mélange binaire ELO-IPDA. Par ailleurs, dans cet exemple, 10% du nombre des groupements époxy présentes dans le milieu sont portées par l'huile ELO et 90% par le co-réactif. Le rapport (N-H/époxy) est encore égal à 1. La composition massique de la formulation est de 11,9% d'ELO, 57,0% de GE et 31,1% d'IPDA.

b. Le mélange des pré-polymères époxy ELO-GE est préparé en versant à température ambiante le glycérol époxydé liquide dans l'huile. La température du mélange ELO-GE est maintenue à l'ambiante et le brassage est mené durant 5 minutes ou jusqu'à l'obtention d'un mélange homogène.

c. Dans un récipient séparé, le bicarbonate de sodium et l'agent absorbeur d'exothermicité sont pesés et mélangés. Si on définit comme 100 parts la masse de la formulation réactive ternaire à base de ELO-GE-IPDA, la quantité de bicarbonate de sodium utilisé correspond à 40 parts. Le bicarbonate de sodium et l'agent absorbeur d'exothermicité sont solides à température ambiante et ils se présentent sous forme d'une poudre fine. Si cette poudre présente des agglomérations il est nécessaire de passer par une étape préalable de broyage afin de détruire ces agrégats et assurer une bonne interaction entre la résine polymère liquide et le mélange de poudres. La température du mélange bicarbonate de sodium-agent absorbeur d'exothermicité est maintenue à l'ambiante et le brassage est mené jusqu'à l'obtention d'un mélange homogène.

d. Une fois que le mélange des poudres est homogène, il est ajouté au mélange formé par les pré-polymères époxy. La température de ce mélange globale est maintenue à l'ambiante et le brassage est mené durant 5 minutes minimum afin d'obtenir une pâte le plus possible homogène.

e. Enfin, la quantité requise de l'agent de réticulation est pesée puis versée dans le mélange contenant les prépolymères époxy, le bicarbonate de sodium et l'agent absorbeur d'exothermicité. La température du mélange est maintenue à l'ambiante et le brassage est mené durant 1-2 minutes avant cuisson.

Si on définit comme étant égale à 100 parts la masse de la formulation réactive ternaire à base de ELO-GE-IPDA, les quantités nécessaires d'agents absorbeurs d'exothermicité sont les suivantes : 10 parts pour l'hydrotalcite, 40 parts pour le carbonate de magnésium basique et 25 parts pour l'hydroxyde d'aluminium. Le dosage a été déterminé grâce à la conduite d'analyses calorimétriques et thermogravimétriques éventuellement affiné par la mise en œuvre pratique.

L'utilisation exclusive d'un de ces trois agents d'absorption d'exothermicité, associée à l'introduction de 40 parts de bicarbonate de sodium comme agent moussant, permet de produire des mousses sur une courte durée de cuisson (entre 3 min et 5 min) à la température de 160 °C et 180 °C. Une période de latence de quelques secondes est observée entre le début de la cuisson et le déclenchement de la réaction de l'agent gonflant qui conduit à la formation des alvéoles. Elle s'explique par le fait que les différents composants n'ont pas tous la même conductivité thermique

1.2. Résultats

La figure 7 montre les résultats des analyses DMA pour les mousses préparées à partir d'un mélange 10ELO-90GE-IPDA avec 40 parts de bicarbonate de sodium et un agent absorbeur d'exothermicité après une cuisson à 180°C pendant 3 min. Les mousses obtenues suite à l'utilisation du carbonate de magnésium basique (en quantité de 40 parts) ont une température de transition vitreuse de 55 °C ; celles produites avec l'ajout d'aluminium (avec un dosage de 25 parts) affichent une température de transition vitreuse de 50 °C et enfin les mousses réalisées avec l'introduction d'hydrotalcite (avec une teneur de 10 parts) présentent une température de transition vitreuse de 42 °C. Ces différences montrent qu'à formulation polymère constante et pour un même agent d'expansion, la nature de l'agent absorbeur d'exothermicité a une influence notable sur les propriétés thermomécaniques finales de la mousse.

Les mousses préparées à partir d'un mélange 10ELO-90GE-IPDA avec 40 parts de bicarbonate de sodium et un agent absorbeur d'exothermicité après une cuisson à 180°C pendant 3 min affichent des valeurs de masse volumiques de 0,16 g/cm$^3$ (hydroxyde d'aluminium), de 0,18 g/cm$^3$ (hydrotalcite) et 0,21 g/cm$^3$ (carbonate de magnésium basique).

**Exemple 2** : **Mousses préparées à partir d'un mélange d'huile de lin époxydée (ELO), de glycérol époxydé (GE) et d'anhydride méthyle-tétrahydrophtalique (MTHPA) en présence de 2-méthylimidazole comme catalyseur dans les proportions suivantes** : **10ELO-90GE-MTHPA et de 40 parts de bicarbonate de potassium**

2.1. Mode opératoire

Préparation du mélange réactif

a) La stoechiométrie du mélange ELO-GE-MTHPA est calculée de façon à conférer au milieu un rapport du nombre de groupements époxy par le nombre de groupements anhydride égal à celui choisi dans le cas du mélange binaire ELO-MTHPA. Par ailleurs, dans cet exemple, 10% du nombre des groupements époxy présentes dans le milieu sont portées par l'huile ELO et 90% par le co-réactif. Le ratio stœchiométrique utilisé, défini comme le rapport entre les groupes anhydride et les groupes époxy, est égale à 0,8. La composition massique de la formulation est de 7,1% d'ELO, 34,3% de GE, 58,5% de MTHPA. La quantité de catalyseur 2-méthylimidazole (2MI) utilisée est égale à 1% en masse de la quantité massique du durcisseur anhydride.

b) Le mélange des prépolymères époxy ELO-GE est préparé en versant à température ambiante le glycérol époxydé liquide dans l'huile. La température du mélange ELO-GE est maintenue à l'ambiante et le brassage est mené durant 5 minutes qui permet généralement l'obtention d'un mélange homogène.

c) Ensuite le bicarbonate de potassium est pesé et rajouté au mélange de prépolymères époxy. Si on prend égale à 100 parts la masse de la formulation réactive ternaire à base de ELO-GE-MTHPA, la quantité de bicarbonate de potassium utilisé correspond à 40 parts. Le bicarbonate de potassium est solide à température ambiante (poudre). Lorsque cette poudre présente des agglomérations il est nécessaire de passer par une étape préalable de broyage afin de détruire ces agrégats et assurer une bonne interaction entre la résine polymère liquide et la poudre. La température du mélange globale est maintenue à l'ambiante et le brassage est mené durant 5 minutes minimum afin d'obtenir une pâte le plus possible homogène.

d) Enfin, la quantité requise de l'agent de réticulation est pesée et versée dans le mélange contenant les prépolymères époxy et le bicarbonate de potassium. La température du mélange est maintenue à l'ambiante et le brassage est mené durant 1-2 minutes avant cuisson

2.2. Résultats

Avec l'introduction de 40 parts de bicarbonate de potassium comme agent moussant on obtient des mousses avec une courte durée de cuisson (3 min) à 180 °C. Le phénomène de moussage est presque instantané (période de latence très courte avant le déclenchement de la décomposition thermique de l'agent gonflant). Les mousses obtenues sont rigides à température ambiante.

La figure 8 montre le résultat de l'analyse DMA pour la mousse préparée à partir d'un mélange 10ELO-90GE-MTHPA catalysé avec le 2-méthylimidazole avec 40 parts de bicarbonate de potassium après une cuisson à 180°C pendant 3 min. La température $T\alpha$ est dans ce cas de 87 °C soit nettement supérieure à celle d'une formulation 10ELO-90GE-IPDA. Cette valeur supérieure démontre que l'agent de réticulation permet de moduler également les propriétés thermomécaniques de la mousse. Dans ce dernier cas, la densité mesurée est de 0,17 g/cm$^3$.

Toutes ces caractéristiques sont satisfaisantes en regard des applications visées à savoir la production de pièces légères mais rigides à destination du secteur automobile en particulier. Les exemples présentés démontrent qu'il est possible au travers du même concept de proposer des mousses dotées de caractéristiques très différentes. La modulation des propriétés permise par la nature et la proportion de chaque constituant permet la création de mousses dotées de propriétés à façon.

## Revendications

1. Mousses biosourcées préparées en faisant réagir :

   a. le produit de réaction d'un ou de plusieurs dérivés lipidiques époxydés biosourcés, avec au moins un agent de réticulation, en présence d'au moins un co-réactif choisi parmi les dérivés glycidyl éthers de polyols biosourcés,
   b. un agent de gonflement et
   c. un agent absorbeur d'exothermicité.

2. Mousses selon la revendication 1 **caractérisées en ce que** l'agent de gonflement est choisi dans le groupe comprenant les agents d'expansion physiques et les agents d'expansion chimiques.

3. Mousses selon la revendication 2 **caractérisées en ce que** les agents d'expansion physiques sont choisis dans le groupe comprenant :

   - les liquides organiques, notamment les alcanes, les cétones, les alcools, les esters, les glycols, les éthers,
   - les gaz comprimés, notamment l'azote ($N_2$) et le dioxyde de carbone et
   - des microsphères expansibles creuses.

4. Mousses selon la revendication 2 **caractérisées en ce que** les agents d'expansion chimiques sont choisis dans le groupe comprenant les agents d'expansion chimiques exothermiques ou endothermiques.

5. Mousses selon la revendication 4 **caractérisées en ce que** les agents d'expansion chimiques endothermiques sont choisis dans le groupe comprenant le 5-phényltétrazole, le phosphate de triphényle, le borate de sodium, l'acide borique, l'acide benzoïque, et les carbonates.

6. Mousses selon la revendication 5 **caractérisées en ce que** le carbonate est le bicarbonate d'ammonium, le carbonate d'ammonium, le carbonate de zinc, le bicarbonate de sodium ou le bicarbonate de potassium.

7. Mousses selon l'une quelconque des revendications précédentes **caractérisées en ce que** l'agent absorbeur d'exothermicité est choisi dans le groupe comprenant l'hydrotalcite, le carbonate de magnésium et l'hydroxyde d'aluminium.

8. Mousses selon l'une quelconque des revendications précédentes **caractérisées par** un rapport du nombre de groupements réactifs de l'agent de réticulation sur le nombre total de groupements époxy présents dans le mélange huile époxydée/co-réactif, égal au rapport du nombre de groupements réactifs de l'agent de réticulation sur le nombre total de groupements époxy du ou des dérivés lipidiques s'ils étaient utilisés comme seule source de groupements époxy.

9. Mousses selon l'une quelconque des revendications précédentes **caractérisées en ce que** le un ou plusieurs dérivés lipidiques époxydés biosourcés sont extraits d'une huile végétale naturelle, notamment l'huile de vernonia, dans laquelle ils sont présents sous forme époxydée.

10. Mousses époxydes biosourcées selon l'une quelconque des revendications 1 à 3, **caractérisées en ce que** le ou les dérivés lipidiques époxydés sont obtenus par époxydation de lipides extraits d'huiles végétales naturelles choisies dans le groupe comprenant les huiles de lin, de chanvre, de tournesol, de colza, de soja, d'olive, de pépins de raisin, de bois de Tung, de coton, de maïs, de noisette, de noix, de noix de coco, de palme, de ricin, de noix de cajou et d'arachide et le mélange de celles-ci ou extraits d'huiles animales.

11. Mousses époxydes biosourcées selon l'une quelconque des revendications précédentes, **caractérisées en ce que** le au moins un co-réactif est obtenu par époxydation d'un polyglycérol issu d'huiles végétales et répond à la formule (I)

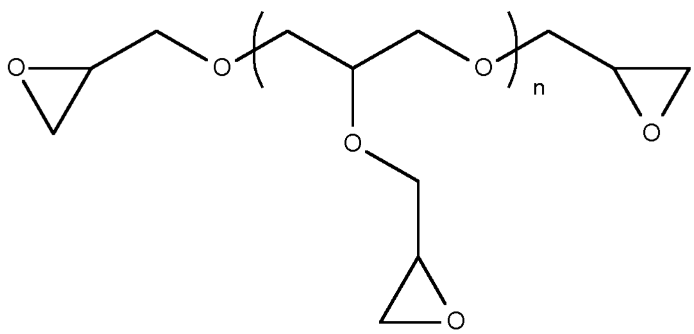

où n est un nombre entier compris entre 1 et 20, notamment le dérivé glycidyl éther du glycérol et le dérivé glycidyl éther du diglycérol.

12. Mousses époxydes biosourcées selon l'une quelconque des revendications précédentes, **caractérisées en ce que** le au moins un co-réactif est obtenu par époxydation d'un sucre, et est notamment le dérivé glycidyl éther du sorbitol.

13. Mousses époxydes biosourcées selon l'une quelconque des revendications précédentes **caractérisées en ce que** le au moins un agent de réticulation est choisi :

a. dans le groupe comprenant des composés porteurs de fonctions amines, lesdits composés, lorsqu'ils sont porteurs de fonctions amines primaires étant choisis dans le groupe comprenant les diamines, les polyamines et leurs mélanges ou
b. dans le groupe des anhydrides acides.

**14.** Mousses époxydes biosourcées selon la revendication 9 **caractérisées en ce que**, lorsque le au moins un agent de réticulation est un composé porteur de groupements N-H, appartenant à des fonctions amines primaires ou secondaires, le rapport du nombre de groupements N-H sur le nombre de groupements époxy est égal à l'unité.

**15.** Mousses époxydes biosourcées selon la revendication 9 **caractérisées en ce que**, lorsque le au moins un agent de réticulation est un anhydride d'acide, le rapport du nombre de groupements anhydride d'acide sur le nombre de groupements époxy est égal à l'unité.

**16.** Procédé de préparation de mousses époxydes biosourcées selon l'une quelconque des revendications précédentes **caractérisé en ce qu'**il comprend :

a) une étape de mélange d'un ou de plusieurs dérivés lipidiques époxydés biosourcés, en présence d'au moins un co-réactif choisi parmi les dérivés glycidyl éthers de polyols biosourcés,
b) une étape d'introduction de l'agent gonflant puis son mélange avec le produit issu de l'étape a), et éventuellement
c) une étape d'addition d'un agent d'exothermicité,
d) une étape d'addition d'au moins un agent de réticulation, puis
e) le mélange de ces différents ingrédients.

**17.** Procédé de préparation de mousses époxydes biosourcées selon l'une quelconque des revendications précédentes **caractérisé en ce qu'**il comprend les étapes suivantes :

a) mélanger un ou plusieurs dérivés lipidiques époxydés biosourcés,
b) ajouter le co-réactif puis opérer à un brassage pour obtenir un mélange époxy homogène,
c) ajouter l'agent gonflant et l'agent d'exothermicité et
d) ajouter l'agent de réticulation au dit mélange puis opérer à un nouveau brassage,
e) laisser alors réagir.

**18.** Utilisation des mousses époxydes biosourcées selon l'une quelconque des revendications 1 à 15 pour la constitution d'âmes alvéolaires de matériaux composites sandwich à destination des transports (automobile, ferroviaire, aéronautique, nautisme...) du bâtiment, du sport ou encore du mobilier notamment urbain.

**19.** Utilisation de mousses époxydes biosourcées selon l'une quelconque des revendications 1 à 15, **caractérisée en ce qu'**il s'agit d'applications concernant des pièces structurales légères mais dotées d'une rigidité mécanique élevée.

**20.** Utilisation de mousses époxydes biosourcées selon l'une quelconque des revendications 1 à 15, **caractérisée en ce qu'**il s'agit d'applications intéressées par des pièces massives ou fines et dotées de caractéristiques d'isolation phonique et thermique.

## Patentansprüche

**1.** Schaumstoffe biologischen Ursprungs, hergestellt durch Reaktion:

a. das Reaktionsprodukt eines oder mehrerer epoxidierter Lipidderivate biologischen Ursprungs mit wenigstens einem Vernetzungsmittel in Gegenwart wenigstens eines Co-Reagenzes, ausgewählt aus Glycidyletherderivaten von Polyolen biologischen Ursprungs,
b. ein Quellmittel und
c. ein Mittel zur Absorption von Exothermie.

**2.** Schaumstoffe nach Anspruch 1, **dadurch gekennzeichnet, dass** das Treibmittel ausgewählt ist aus einer Gruppe bestehend aus physikalischen Treibmitteln und chemischen Treibmitteln.

**3.** Schaumstoffe nach Anspruch 2, **dadurch gekennzeichnet, dass** die physikalischen Treibmittel ausgewählt sind aus einer Gruppe bestehend aus:

- organische Flüssigkeiten, einschließlich Alkane, Ketone, Alkohole, Ester, Glykole, Ether,
- komprimierte Gase, einschließlich Stickstoff (N2) und Kohlendioxid, und

- hohle, expandierbare Mikrokugeln.

4. Schaumstoffe nach Anspruch 2, **dadurch gekennzeichnet, dass** die chemischen Treibmittel ausgewählt sind aus einer Gruppe bestehend aus exothermen oder endothermen chemischen Treibmitteln.

5. Schaumstoffe nach Anspruch 4, **dadurch gekennzeichnet, dass** die endothermen chemischen Treibmittel ausgewählt sind aus einer Gruppe bestehend aus 5-Phenyltetrazol, Triphenylphosphat, Natriumborat, Borsäure, Benzoesäure und Carbonaten.

6. Schaumstoffe nach Anspruch 5, **dadurch gekennzeichnet, dass** das Carbonat Ammoniumhydrogencarbonat, Ammoniumcarbonat, Zinkkarbonat, Natriumbicarbonat oder Kaliumhydrogencarbonat ist.

7. Schaumstoffe nach einem der vorhergehenden Ansprüche, **dadurch gekennzeichnet, dass** Mittel zur Absorption von Exothermie ausgewählt ist aus einer Gruppe bestehend aus Hydrotalcit, Magnesiumcarbonat und Aluminiumhydroxid.

8. Schaumstoffe nach einem der vorhergehenden Ansprüche, **gekennzeichnet durch** ein Verhältnis der Anzahl der reaktiven Gruppen des Vernetzungsmittels zur Gesamtzahl der Epoxygruppen in dem epoxidierten/co-reaktiven Ölgemisch, gleich dem Verhältnis der Anzahl der reaktiven Gruppen des Vernetzungsmittels zur Gesamtzahl der Epoxygruppen des/der Lipidderivate(s), wenn sie als einzige Quelle für Epoxygruppen verwendet wurden.

9. Schaumstoffe nach einem der vorhergehenden Ansprüche, **dadurch gekennzeichnet, dass** ein oder mehrere epoxidierte Lipidderivate biologischen Ursprungs aus einem natürlichen Pflanzenöl, insbesondere Vernoniaöl, extrahiert werden, in welchem sie in epoxidierter Form vorliegen.

10. Epoxidschaumstoffe biologischen Ursprungs nach einem der Ansprüche 1 bis 3, **dadurch gekennzeichnet, dass** die epoxidierten Lipidderivate durch Epoxidierung von Lipiden erhalten werden, die aus natürlichen Pflanzenölen ausgewählt aus einer Gruppe gewonnen wurden bestehend aus Leinölen, Hanföl, Sonnenblumenöl, Rapsöl, Sojabohnenöl, Olivenöl, Traubenkernöl, Tungöl, Baumwollöl, Maisöl, Haselnussöl, Walnussöl, Kokosnussöl, Palmöl, Rizinusöl, Cashewnussöl und Erdnussöl und eine Mischung davon oder tierische Ölextrakte.

11. Epoxidschaumstoffe biologischen Ursprungs nach einem der vorhergehenden Ansprüche, **dadurch gekennzeichnet, dass** das wengistens eine Co-Reagenz durch Epoxidierung eines von Pflanzenölen abgeleiteten Polyglycerins erhalten wird und der Formel (I) entspricht.

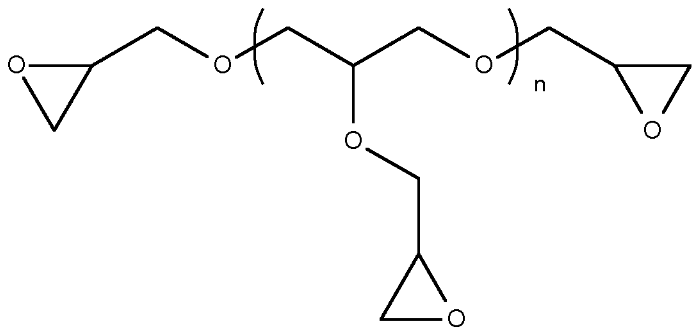

wobei n eine ganze Zahl zwischen 1 und 20 ist, insbesondere das Glycidyletherderivat von Glycerin und das Glycidyletherderivat von Diglycerin.

12. Epoxidschaumstoffe biologischen Ursprungs nach einem der vorhergehenden Ansprüche, **dadurch gekennzeichnet, dass** das wenigstens eine Co-Reagenz durch Epoxidierung eines Zuckers erhalten wird und insbesondere das Glycidyletherderivat von Sorbitol ist.

13. Epoxidschaumstoffe biologischen Ursprungs nach einem der vorhergehenden Ansprüche, **dadurch gekennzeichnet, dass** das wenigstens eine Vernetzungsmittel ausgewählt ist:

a. aus einer Gruppe, die Verbindungen umfasst, die Aminfunktionen tragen, wobei die Verbindungen, wenn sie

primäre Aminfunktionen tragen, ausgewählt sind aus der Gruppe, die Diamine, Polyamine und Mischungen davon umfasst, oder
b. aus einer Gruppe der Säureanhydride.

**14.** Epoxidschaumstoffe biologischen Ursprungs nach Anspruch 9, **dadurch gekennzeichnet, dass**, wenn das wenigstens eine Vernetzungsmittel eine Verbindung ist, die N-H-Gruppen trägt, die zu primären oder sekundären Aminfunktionen gehören, das Verhältnis der Anzahl der N-H-Gruppen zu der Anzahl der Epoxidgruppen gleich eins ist.

**15.** Epoxidschaumstoffe biologischen Ursprungs nach Anspruch 9, **dadurch gekennzeichnet, dass**, wenn das wenigstens eine Vernetzungsmittel ein Säureanhydrid ist, das Verhältnis der Anzahl der Säureanhydridgruppen zur Anzahl der Epoxidgruppen gleich eins ist.

**16.** Verfahren zur Herstellung von Epoxidschaumstoffen biologischen Ursprungs nach einem der vorhergehenden Ansprüche, **dadurch gekennzeichnet, dass** es umfasst:

a) einen Schritt des Mischens eines oder mehrerer epoxidierter Lipidderivate biologischen Ursprungs in Gegenwart von wenigstens einem Co-Reagenz, ausgewählt aus Glycidyletherderivaten von Polyolen biologischen Ursprungs,
b) einen Schritt zum Einbringen des Treibmittels und anschließenden Mischens mit dem aus Schritt a) resultierenden Produkt, und gegebenenfalls
c) einen Schritt zum Hinzufügen eines Exothermiemittels,
d) einen Schritt zum Hinzufügen von wenigstens einem Vernetzungsmittel, dann
e) das Mischen dieser verschiedenen Bestandteile.

**17.** Verfahren zur Herstellung von Epoxidschaumstoffen biologischen Ursprungs nach einem der vorstehenden Ansprüche, **dadurch gekennzeichnet, dass** es die folgenden Schritte umfasst:

a) Mischen eines oder mehrerer epoxidierter Lipidderivate biologischen Ursprungs,
b) Zugeben des Co-Reagenzes und dann umrühren, um eine homogene Epoxidmischung zu erhalten,
c) Hinzufügen des Treibmittels und des Exothermiemittels und
d) Zugeben des Vernetzungsmittels zu dem Gemisch und weiteren Umrühren,
e) Reagieren lassen.

**18.** Verwendung von Epoxidschaumstoffen biologischen Ursprungs nach einem der Ansprüche 1 bis 15 zum Aufbau von Waben aus Sandwich-Verbundwerkstoffen für den Verkehr (Automobil, Schiene, Luftfahrt, Wassersport usw.), für Gebäude, für den Sport oder weiteres Mobiliar, insbesondere städtisches Mobiliar.

**19.** Verwendung von Epoxidschaumstoffen biologischen Ursprungs nach einem der Ansprüche 1 bis 15, **dadurch gekennzeichnet, dass** es sich um Anwendungen für leichte Strukturbauteile mit hoher mechanischer Festigkeit handelt.

**20.** Verwendung von Epoxidschaumstoffen biologischen Ursprungs nach einem der Ansprüche 1 bis 15, **dadurch gekennzeichnet, dass** es sich um Anwendungen mit massiven oder dünnen Teilen und mit Schall- und Wärmedämmeigenschaften handelt.

## Claims

**1.** Biosourced foams prepared by reacting:

a. the reaction product of one or more biosourced epoxidized lipid derivatives with at least one cross-linking agent, in the presence of at least one co-reactant selected from glycidyl ether derivatives of biosourced polyols,
b. a blowing agent and
c. an exothermicity absorbing agent.

**2.** Foams according to claim 1 **characterized in that** the blowing agent is selected in the group comprising physical and chemical blowing agents.

**3.** Foams according to claim 2 **characterized in that** the physical blowing agents are selected in the group comprising :

- organic liquid, in particular alkanes, ketones, alcohols, esters, glycols, ethers,
- compressed gases, in particular nitrogen ($N_2$) and carbon dioxide and
- hollow expandable microspheres.

**4.** Foams according to claim 2 **characterized in that** the chemical blowing agents are selected in the group comprising exothermic or endothermic chemical blowing agents

**5.** Foams according to claim 4 **characterized in that** the endothermic chemical blowing agents are selected in the group comprising 5-phenyltetrazole, triphenyl phosphate, sodium borate, boric acid, benzoic acid and carbonates.

**6.** Foams according to claim 5 **characterized in that** the carbonate is ammonium bicarbonate, ammonium carbonate, zinc carbonate, sodium bicarbonate or potassium bicarbonate.

**7.** Foams according to any of the preceding claims **characterized in that** the exothermicity absorbing agent is selected in the group comprising hydrotalcite, magnesium carbonate and aluminium hydroxide.

**8.** Foams according to any of the preceding claims **characterized by** a ratio of the number of reactive groups of the cross-linking agent to the total number of epoxy groups present in the epoxidized oil/reactive compound mixture equal to the ratio of the number of reactive groups of the cross-linking agent to the total number of epoxy groups of the lipid derivative(s) if they were used as the sole source of epoxy groups.

**9.** Foams according to any of the preceding claims **characterized in that** the one or more biosourced epoxidised lipid derivatives are extracted from a natural vegetable oil, in particular vernonia oil, in which they are present in epoxidised form.

**10.** Foams according to any of claims 1 to 3, **characterized in that** the one or more biosourced epoxidised lipid derivatives are obtained epoxydation of lipids extracted from natural vegetable oils selected from the group comprising linseed, hemp, sunflower, rapeseed, soya, olive, grape seed, tung wood, cotton, maize, hazelnut, walnut, coconut, palm, castor, cashew and peanut oils and mixtures thereof or animal oil extracts.

**11.** Foams according to any of the preceding claims **characterized in that** the at least one co-reactant is obtained by epoxydation of a polyglycerol issued from vegetal oils and has the formula (I)

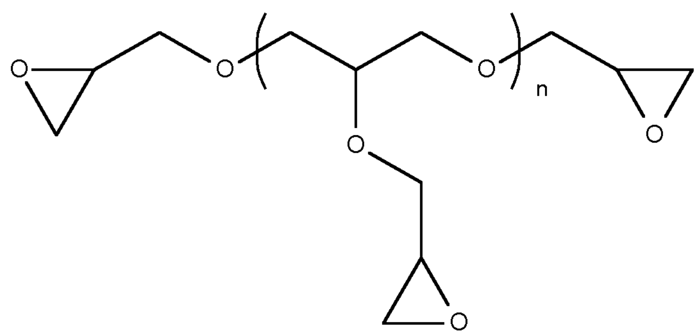

wherein is an integer between 1 and 20, in particular the glycidyl ether derivative of glycerol and the glycidyl ether derivative of diglycerol.

**12.** Foams according to any of the preceding claims **characterized in that** the at least co-reactant is obtained by epoxydation of a sugar, and is in particular the glycidyl ether derivative of sorbitol.

**13.** Foams according to any of the preceding claims **characterized in that** the at least one cross-linking agent is selected from:

a. the group consisting of amine functional compounds, said compounds, when carrying primary amine functions, being selected from the group consisting of diamines, polyamines and mixtures thereof or

b. the group of acid anhydrides.

**14.** Biosourced epoxy foams according to claim 9, **characterized in that**, when the at least one cross-linking agent is a compound carrying N-H groups, belonging to primary or secondary amine functions, the ratio of the number of N-H groups to the number of epoxy groups is equal to 1.

**15.** Biosourced epoxy foams according to claim 9, **characterized in that**, when the at least one cross-linking agent is an acid anhydride, the ratio of the number of anhydride acid to the number of epoxy groups is equal to 1.

**16.** A process for the preparation of biosourced epoxy foams according to any of the preceding claims **characterized in that** it comprises:

a) a step of mixing one or more biosourced epoxidized lipid derivatives, in the presence of at least one co-reactant selected from glycidyl ether derivatives of biosourced polyols,
b) a step of introducing the blowing agent and the mixing it with the product of step a), and optionally
c) an exothermicity agent addition step,
d) an addition step of at least one cross-linking agent, then
e) the mixing of these differents ingredients.

**17.** A process for the preparation of biosourced epoxy foams according to any of the preceding claims **characterized in that** it comprises the following steps:

a) mixing one or more biosourced epoxidized lipid derivatives,
b) adding the co-reactant and then stir to obtain a homogenous epoxy mixture,
c) adding the blowing agent and the exothermicity agent and
d) adding the cross-linking agent to said mixture and stir again,
e) then let it react.

**18.** Use of biosourced epoxy foams according to any of claims 1 to 15 for the constitution of honeycomb cores of composite sandwich materials for use in transport (automotive, rail, aeronautics, water sports, etc.), construction, sports or furniture, particularly street furniture.

**19.** Use of biosourced epoxy foams according to any one of claims 1 to 15, **characterized in that** these are applications for lightweight structural parts with high mechanical rigidity.

**20.** Use of biosourced epoxy foams according to any one of claims 1 to 15, **characterized in that** they are intended for applications concerned with solid or thin parts with sound and heat insulating properties.

**FIGURE 1**

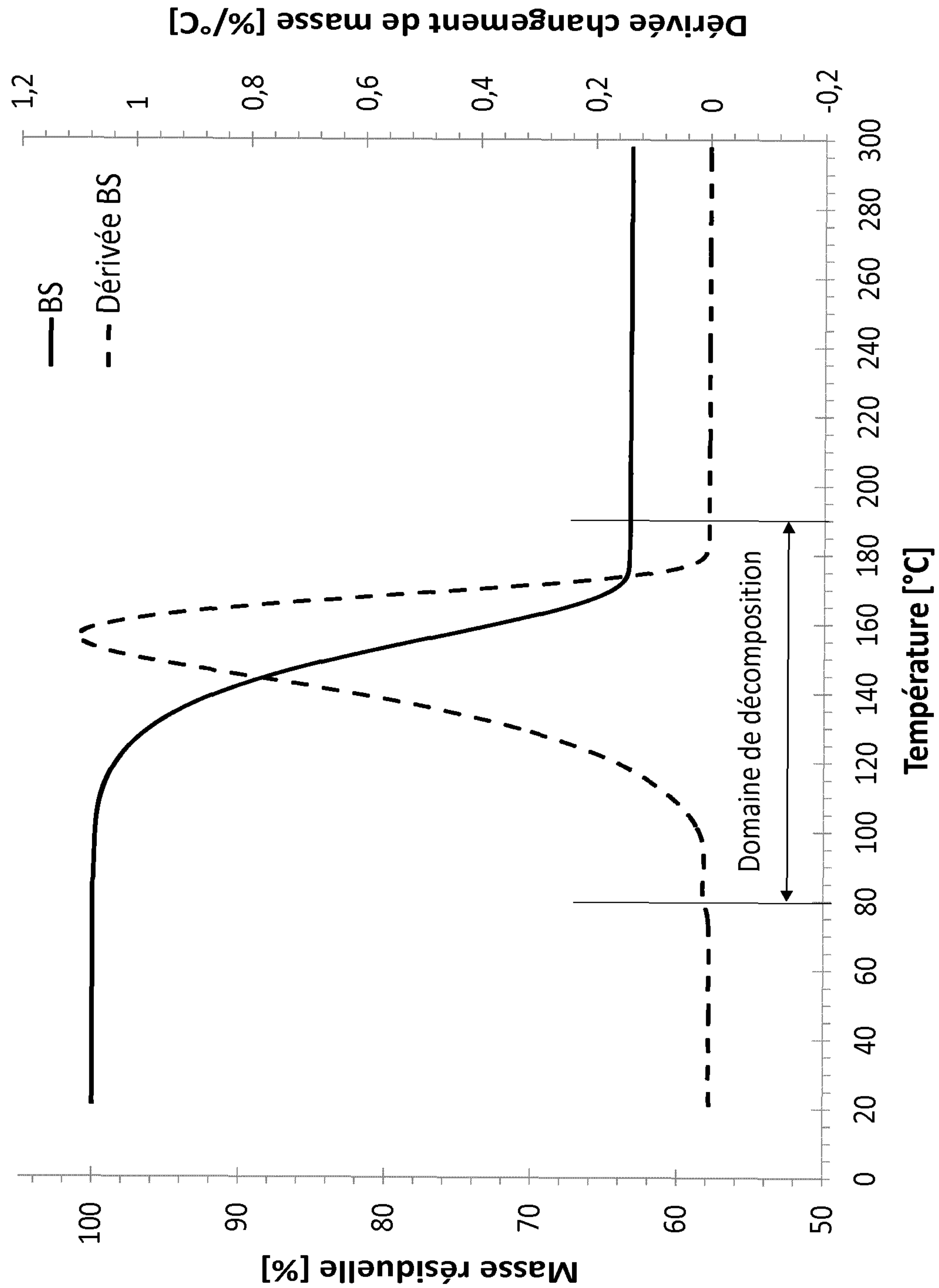

Dérivée changement de masse [%/°C]
1,2
1
0,8
0,6
0,4
0,2
0
-0,2
BS
Dérivée BS
Domaine de décomposition
Température [°C]
0
20
40
60
80
100
120
140
160
180
200
220
240
260
280
300
Masse résiduelle [%]
100
90
80
70
60
50

FIGURE 2

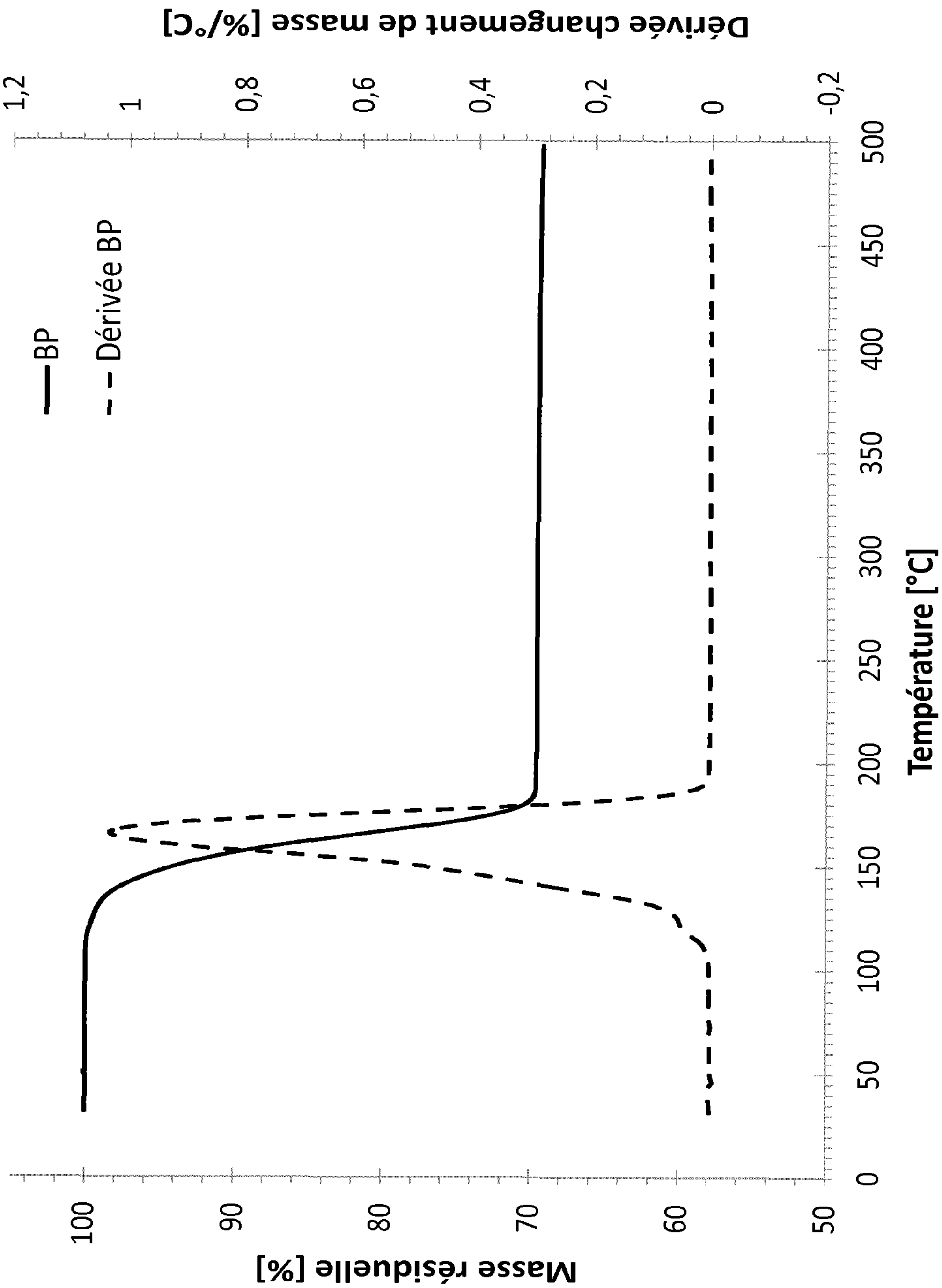

Dérivée changement de masse [%/°C]
1,2
1
0,8
0,6
0,4
0,2
0
-0,2
BP
Dérivée BP
Masse résiduelle [%]
100
90
80
70
60
50
Température [°C]
0
50
100
150
200
250
300
350
400
450
500

**FIGURE 3**

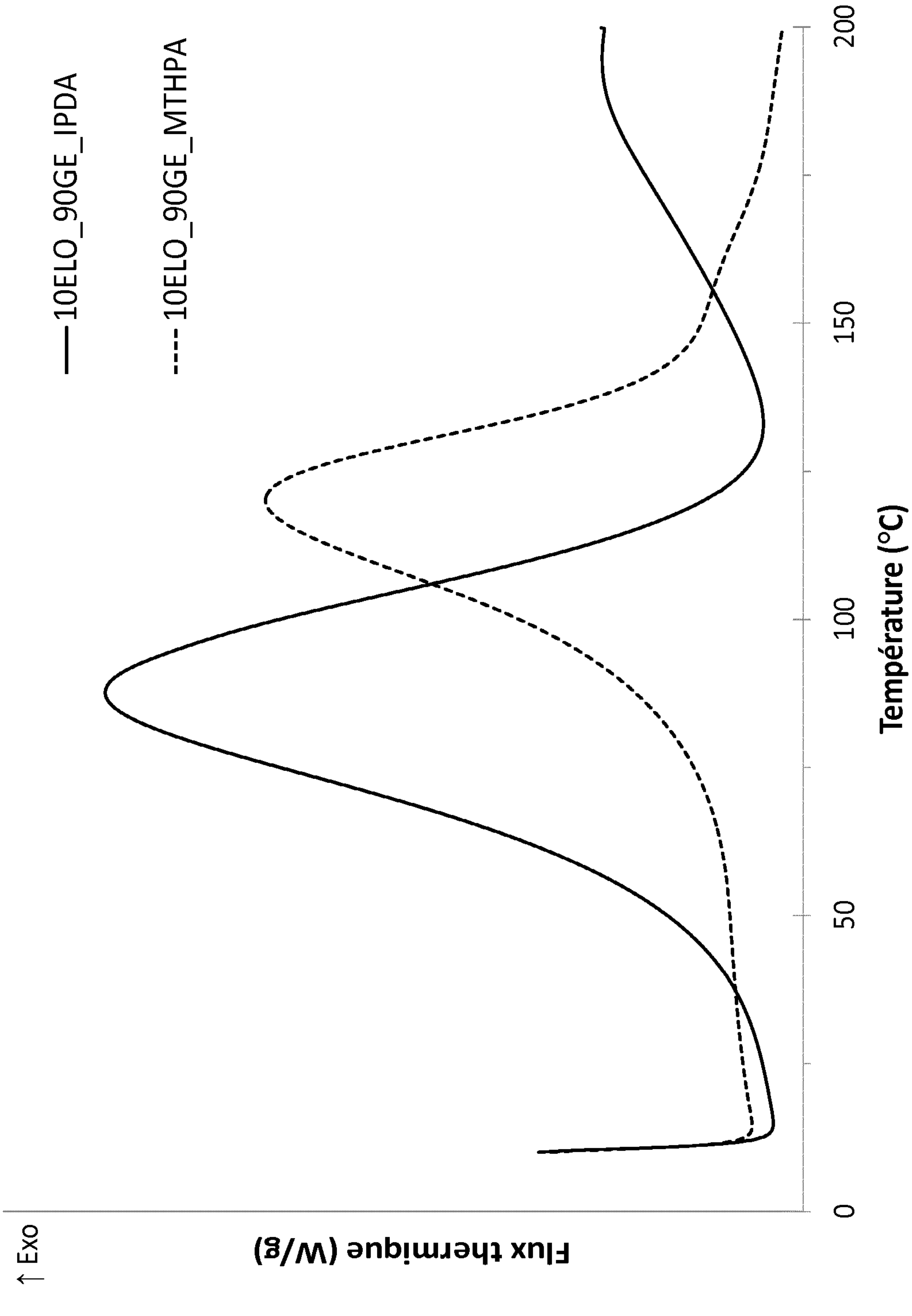

10ELO_90GE_IPDA
10ELO_90GE_MTHPA
↑Exo
Flux thermique (W/g)
Température (°C)
0
50
100
150
200

**FIGURE 4**

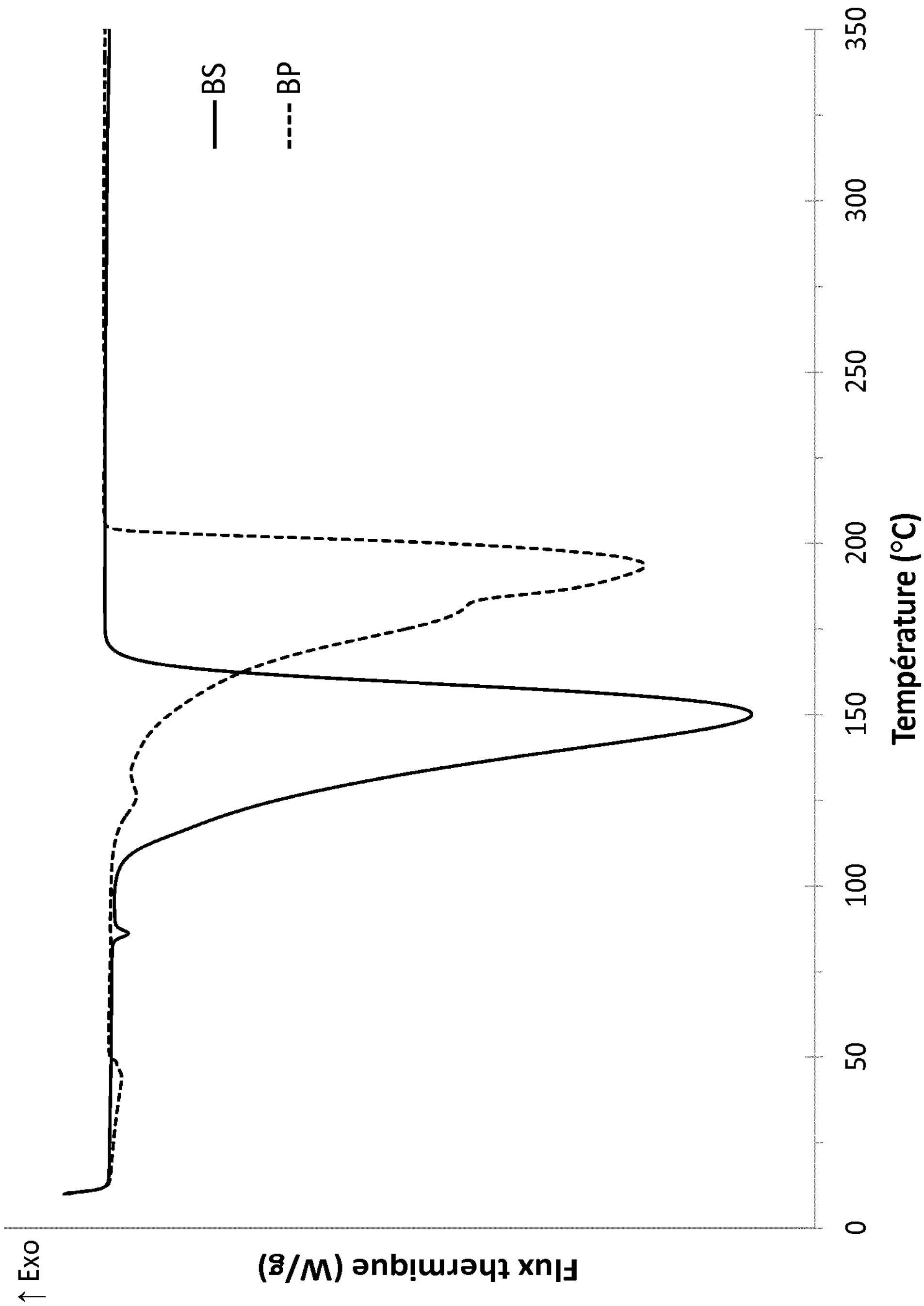

↑ Exo
Flux thermique (W/g)
Température (°C)
0
50
100
150
200
250
300
350
BS
BP

FIGURE 5

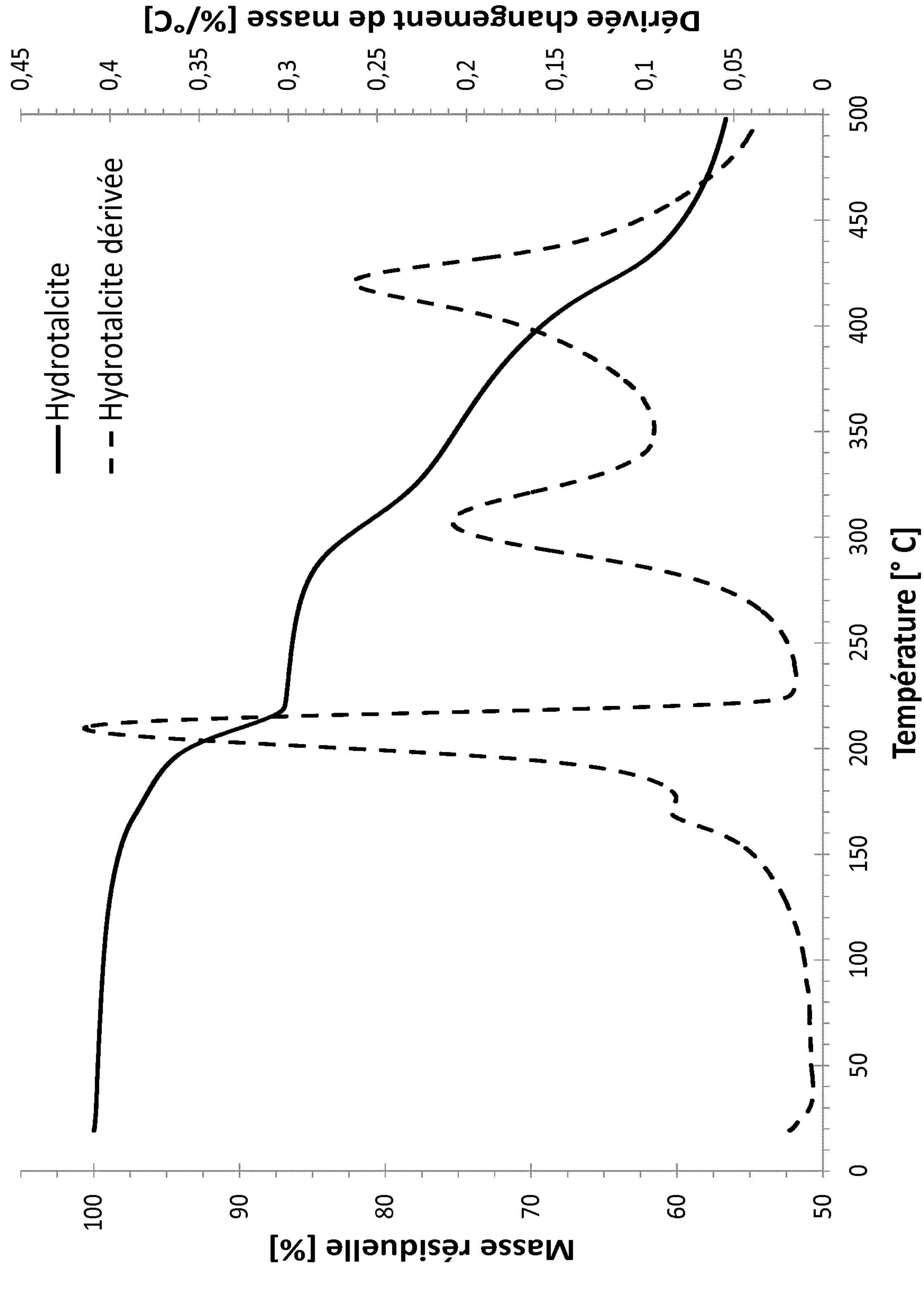
Dérivée changement de masse [%/°C]
0,45
0,4
0,35
0,3
0,25
0,2
0,15
0,1
0,05
0
Hydrotalcite
Hydrotalcite dérivée
Masse résiduelle [%]
100
90
80
70
60
50
Température [° C]
0
50
100
150
200
250
300
350
400
450
500

**FIGURE 6**

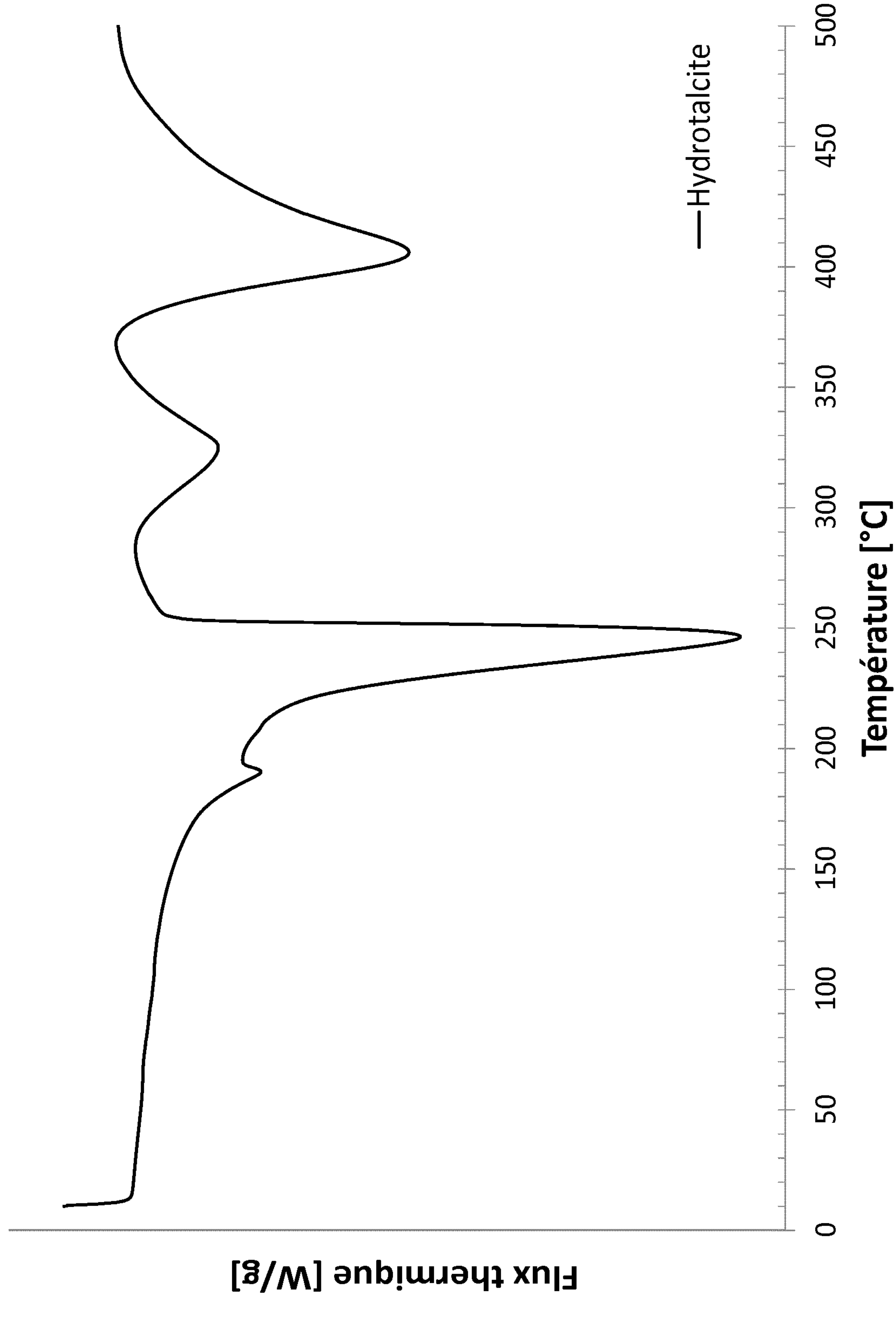
Hydrotalcite
Température [°C]
Flux thermique [W/g]
0
50
100
150
200
250
300
350
400
450
500

**FIGURE 7**

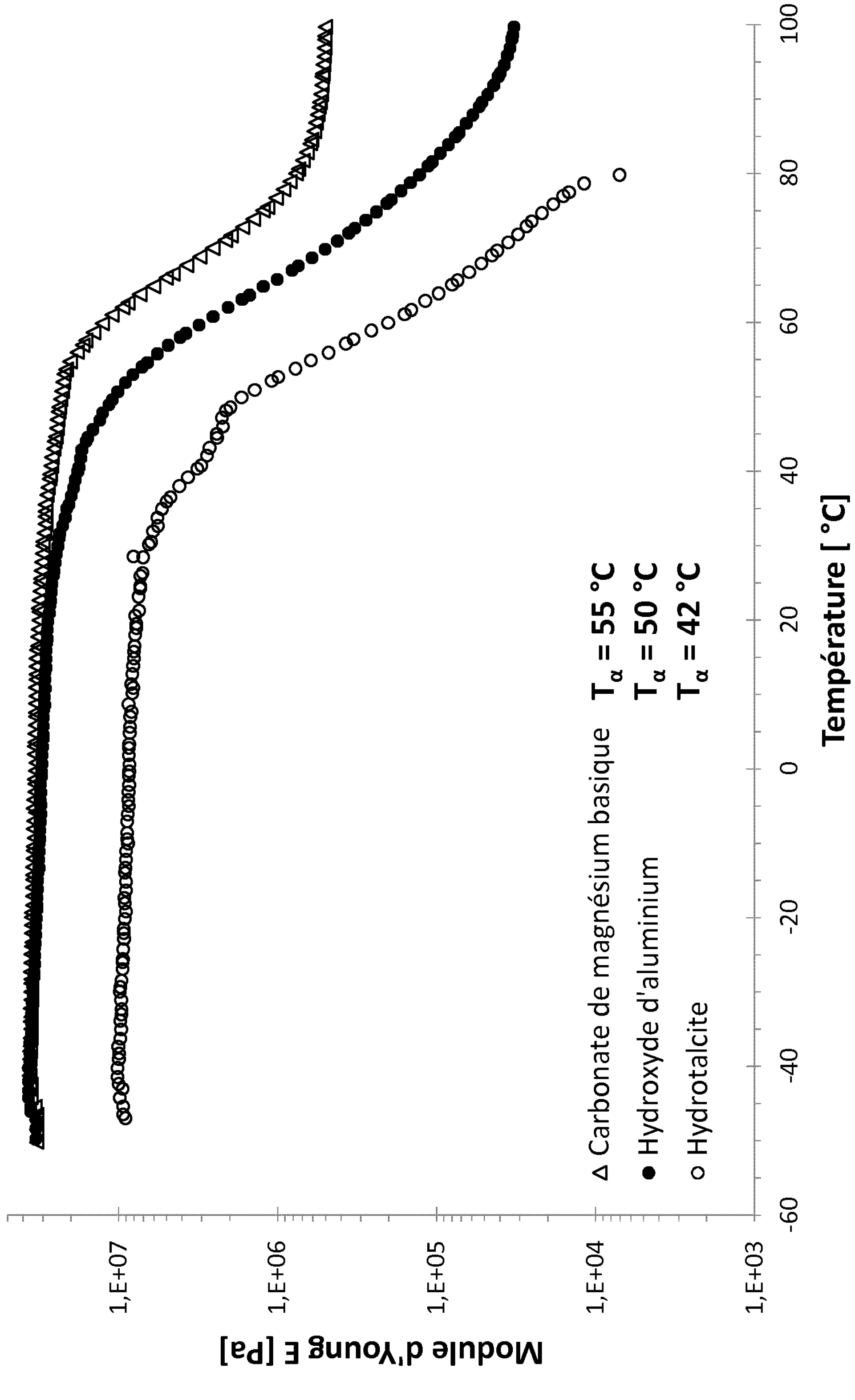
Module d'Young E [Pa]
1,E+03
1,E+04
1,E+05
1,E+06
1,E+07
Température [ °C]
-60
-40
-20
0
20
40
60
80
100
Δ Carbonate de magnésium basique
● Hydroxyde d'aluminium
○ Hydrotalcite
Tα = 55 °C
Tα = 50 °C
Tα = 42 °C

**FIGURE 8**

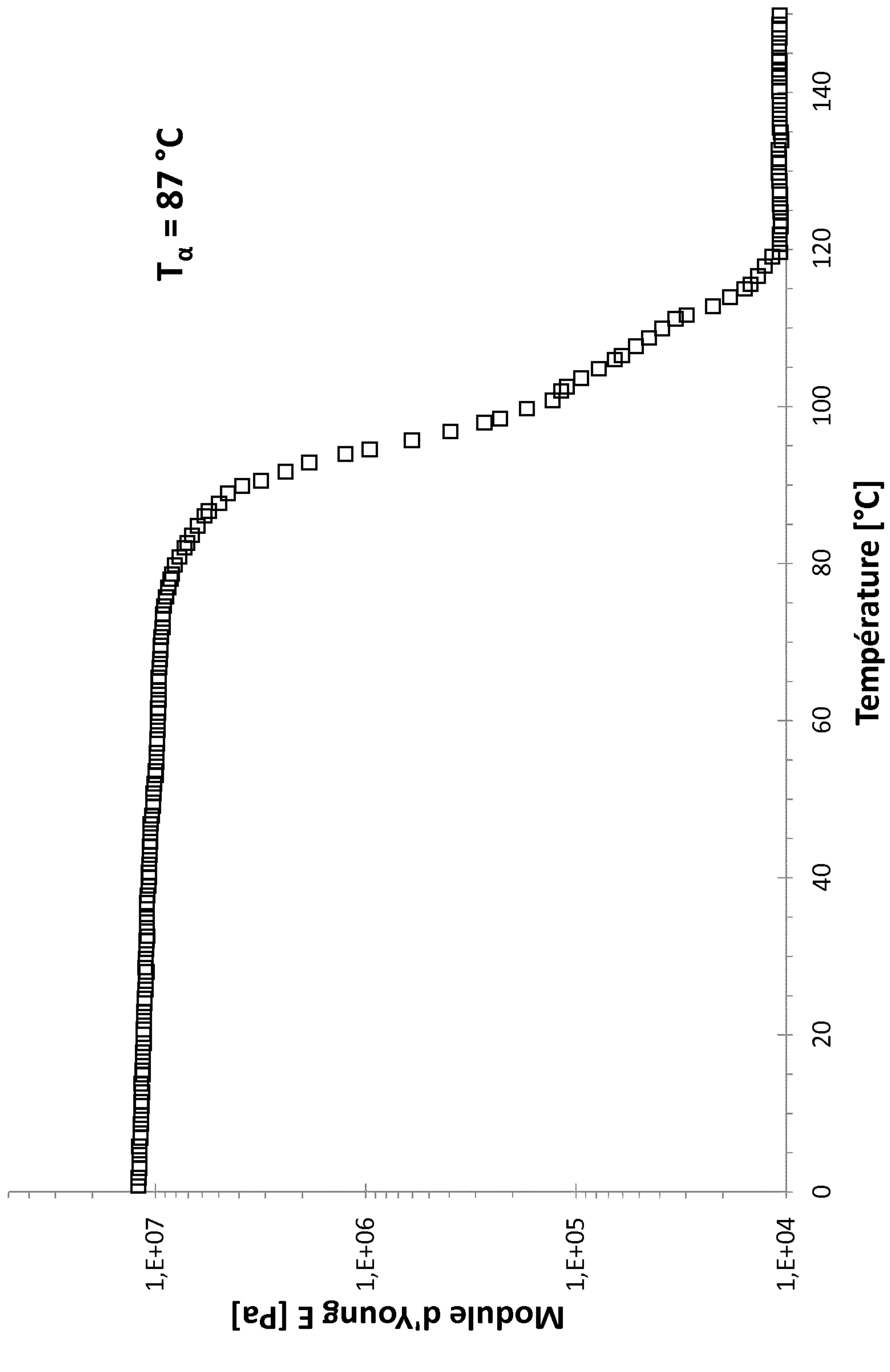

$T_\alpha$ = 87 °C
Module d'Young E [Pa]
1,E+07
1,E+06
1,E+05
1,E+04
Température [°C]
0
20
40
60
80
100
120
140

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 9400512 A
- KR 20010037126
- CN 103613840
- US 2010199884 A
- US 5797984 A
- US 5554660 A
- US 2012007267 A
- WO 2013006781 A
- WO 2014079721 A
- WO 2014048777 A
- US 2014221696 A
- US 2013023599 A
- WO 2014014980 A
- CN 101289570
- US 2014158927 A
- EP 2757126 A
- WO 2014053239 A
- WO 2014117946 A
- WO 2013124574 A
- WO 0107154 A


### Littérature non-brevet citée dans la description


- **LAWTON J.W. et al.** *Industrial Crops and Products,* 2004, vol. 19 (1), 41-48
- **SOYKEABKAEW N. et al.** *Carbohydrate Polymers,* 2004, vol. 58 (1), 53-63
- **BERGERET A. et al.** *International Journal of Polymer Science, ID 569871,* 14 Janvier 2011
- **TU Y.C. et al.** *Journal of Applied Polymer Science,* 2007, vol. 105 (2), 453-459
- **FAN H. et al.** *Journal of Applied Polymer Science,* 2013, vol. 127 (3), 1623-1629
- **NARINE S.S. et al.** *Journal of the American Oil Chemists Society,* 2007, vol. 84 (1), 65-72
- **GUO A et al.** *Journal of Applied Polymer Science,* 2000, vol. 77 (2), 467-473
- **JAVNI I. et al.** *Journal of Polymers and the Environment,* 2004, vol. 12 (3), 123-129
- **VERONESE V.B. et al.** *Journal of Applied Polymer Science,* 2011, vol. 120 (1), 530-537
- **BENES H. et al.** *European Journal of Lipid Science and Technology,* 2012, vol. 114 (1), 71-83
- **SURESH K.I.** *ACS Sustainable Chemistry & Engineering,* 2013, vol. 1 (2), 232-242
- **ARANGUREN M.I et al.** *Journal of Applied Polymer Science,* 2007, vol. 105 (5), 2791-2800
- **KURANSKA, M. et al.** *Composite Science and Technology,* 2012, vol. 72 (2), 299-304
- **BONNAILLIE L.M. et al.** *Journal of Applied Polymer Science,* 2007, vol. 105 (3), 1042-1052
- **WANG, H.J. et al.** *Biomacromolecules,* 2008, vol. 9 (2), 615-623
- *Industrial Crops and Products,* 2009, vol. 29 (2-3), 356-363
- *Bioresource Technology,* 2009, vol. 100 (21), 5162-5169
- **DOGAN et al.** *Journal of Applied Polymer Science,* 2008, vol. 110 (2), 1129-1135